# EUROPEAN PATENT SPECIFICATION

(11) **EP 4 240 053 B1**
(45) Date of publication and mention of the grant of the patent: **01.04.2026**
(21) Application number: 21913577.9
(22) Date of filing: 18.11.2021
(51) Int. Cl.: H04L 65/80

(54) **DATA TRANSMISSION METHOD AND APPARATUS, COMPUTER-READABLE STORAGE MEDIUM, ELECTRONIC DEVICE, AND COMPUTER PROGRAM PRODUCT**
DATENÜBERTRAGUNGSVERFAHREN UND -VORRICHTUNG, COMPUTERLESBARES SPEICHERMEDIUM, ELEKTRONISCHE VORRICHTUNG UND COMPUTERPROGRAMMPRODUKT
PROCÉDÉ ET APPAREIL DE TRANSMISSION DE DONNÉES, SUPPORT DE STOCKAGE LISIBLE PAR ORDINATEUR, DISPOSITIF ÉLECTRONIQUE ET PRODUIT PROGRAMME D'ORDINATEUR

(30) Priority: 04.01.2021 CN 202110004590
(43) Date of publication of application: 06.09.2023
(73) Proprietor: Tencent Technology (Shenzhen) Company Limited, Shenzhen, Guangdong, 518057 (CN)
(72) Inventor: LEI, Yixue, Shenzhen, Guangdong 518057 (CN)
(74) Representative: Novagraaf International SA
(86) International application number: PCT/CN2021/131399
(87) International publication number: WO 2022/142835

(56) References cited:
- WO-A1-2015/106444
- WO-A1-2019/159082
- WO-A1-2020/259862
- CN-A- 110 769 380
- CN-A- 112 804 711
- US-A1- 2017 054 528
- ZTE: "(TP for NR BL CR for TS 38.413): Discussion on AMF initiated two GTP-U tunnel establishment", vol. RAN WG3, no. Montreal, Canada; 20180702 - 20180706, 22 June 2018 (2018-06-22), XP051503765, Retrieved from the Internet <URL:http://www.3gpp.org/ftp/tsg%5Fran/WG3%5FIu/TSGR3%5FAHGs/R3%2DAH%2D1807/Docs/R3%2D183668%2Ezip> [retrieved on 20180622]
- ZTE: "(TP for NR BL CR for TS 38.413): Discussion on AMF initiated two GTP-U tunnel establishment", 3GPP TSG-RAN WG3 NR ADHOC 1807 ; R3-183668, 3RD GENERATION PARTNERSHIP PROJECT (3GPP), SOPHIA-ANTIPOLIS CEDEX ; FRANCE, 22 June 2018 (2018-06-22), Montreal, Canada; 20180702 - 20180706, XP051503765

## Description

### RELATED APPLICATION

This application claims priority to Chinese Patent Application No. 202110004590.5, filed on January 4, 2021.

### TECHNICAL FIELD

This application relates to the field of computers and communications technologies, and relates to data transmission methods and an electronic device.

### BACKGROUND

In the field of communications, for example, in 5th-Generation (5G) and evolved 5G systems, high-bandwidth advanced interactive services, such as cloud gaming, virtual reality (VR), augmented reality (AR), mixed reality (MR), extended reality (XR), and cinematic reality (CR), are important types of services. These advanced interactive services have a high requirement on the timeliness of transmission, and with the improved resolution, frame rate and degree of freedom, data generated by the application layer increases greatly, which brings a great load to network transmission.

Generally, a data packet generated by the application layer of an advanced interactive service is usually cut into a large number of subpackets so as to be transmitted in fragments. However, in the process of transmitting the data packet of the advanced interactive service, if the transmission of one of the subpackets fails, the content of the entire data packet cannot be restored and presented in real time at the receiver, and thus the requirements for high bandwidth and low latency of advanced interactive services cannot be met.

The document WO2019159082A1 provides systems and methods for handling Quality of Service (QoS) mobility and dual connectivity. A method of operation of a network node in a cellular communications network includes deciding to split an existing Protocol Data Unit (PDU) session that includes a current uplink tunnel information; and setting up resources for the split PDU session. In this way, it is possible to support QoS mobility in the different tunnel during dual connectivity. The network node is a Master Next Generation - Radio Access Network (NG-RAN) node, and setting up resources for the split PDU session includes sending an S-Node Addition/Modification Request including the current uplink tunnel information for the split PDU session to a Secondary NG-RAN node in the cellular communications network; and receiving a newly added additional downlink tunnel information from the Secondary NG-RAN node.

The document WO2020259862A1 provides mechanisms for establishing a communication session with a local serving network. A method is performed by a terminal device. The method includes obtaining an indication of traffic to be communicated. The traffic is associated with a traffic descriptor. The method includes selecting a URSP rule for the traffic to be communicated in a communication session with the local serving network. The URSP rule is selected in accordance with the traffic descriptor and in accordance with a validity condition for the communication session. The validity condition at least pertains to network support for IMS in the local serving network. The method includes establishing a communication session with the local serving network for communicating the traffic according to the selected URSP rule.

ZTE: "(TP for NR BL CR for TS 38.413): Discussion on AMF initiated two GTP-U tunnel establishment", 3G PP DRAFT, R3-1 83668, 22 June 2018 discusses AMF initiated two GTP-U tunnel establishment.

### SUMMARY

This application provides data transmission methods and an electronic device, which reduce the time delay and consumption of resources in transmission of data packets. The present invention is defined by the subject-matter of the independent claims. Further detailed embodiments are defined in the dependent claims.

This application provides a data transmission method, including:
receiving access stratum context information transmitted by an access and mobility management function (AMF), the access stratum context information indicating that different types of advanced interactive data packets are transmitted in different general packet radio service tunnel protocol user plane (GTP-U) tunnels, and are carried by a same data radio bearer (DRB), the advanced interactive data packets are generated by application layer of an advanced interactive service;
detecting, in response to identifying that data packets transmitted by a user-plane functional entity through the GTP-U tunnels are fragmented subpackets of the advanced interactive data packets, a state of transmission of the fragmented subpackets of the advanced interactive data packets based on the access stratum context information during transmission of the fragmented subpackets of the advanced interactive data packets to a user equipment based on the DRB; and
in response to detecting that transmission of a fragmented subpacket of an advanced interactive data packet of a specified type to the user equipment has failed, stopping transmission of remaining fragmented subpackets of the advanced interactive data packet of the specified type to the user equipment.

This application provides another data transmission method, including:
receiving protocol data unit (PDU) session management policy information transmitted by a session management function (SMF), the PDU session management policy information indicating that different types of advanced interactive data packets are transmitted in different GTP-U tunnels, and are carried by a same DRB, the advanced interactive data packets are generated by application layer of an advanced interactive service;
transmitting received fragmented subpackets of the different types of advanced interactive data packets to a next generation nodeB in different GTP-U tunnels based on the PDU session management policy information, and detecting a state of transmission of the fragmented subpackets of the advanced interactive data packets; and
stopping transmission of remaining fragmented subpackets of an advanced interactive data packet of a specified type to the next generation nodeB in response to detecting that transmission of a fragmented subpacket of the advanced interactive data packet of the specified type to the next generation nodeB has failed.

This application provides an electronic device, including:
one or more processors; and
a storage apparatus configured to store one or more programs, the one or more programs, when executed by the one or more processors, implementing the data transmission methods provided in this application.

This application has at least the following beneficial effects. The advanced interactive data packets (namely, data packets of an advanced interactive service) are fragmented into subpackets, and the subpackets are classified, so that in a case that the transmission of a subpacket of an advanced interactive data packet of a specified type to the user equipment fails, the transmission of remaining fragmented subpackets of the advanced interactive data packet of the specified type to the user equipment can be stopped. That is, in the case that the transmission of a subpacket fails, the transmission of invalid subpackets can be stopped in time. Therefore, the time delay and consumption of resources in the transmission of data packets can be reduced.

### BRIEF DESCRIPTION OF THE DRAWINGS

FIG. 1 shows a schematic diagram of an exemplary system architecture according to an embodiment of this application.
FIG. 2 shows a schematic diagram illustrating the transmission process of an advanced interactive data packet according to an embodiment of this application.
FIG. 3 shows a flowchart of a data transmission method according to this application.
FIG. 4 shows a diagram illustrating a partition structure of an advanced interactive data packet according to an embodiment of this application.
FIG. 5 shows a flowchart of another data transmission method according to this application.
FIG. 6 shows a flowchart of yet another data transmission method according to an embodiment of this application.
FIG. 7 shows a flowchart of still yet another data transmission method according to an embodiment of this application.
FIG. 8 shows a schematic diagram illustrating the transmission process of another advanced interactive data packet according to an embodiment of this application.
FIG. 9 shows a diagram illustrating the configuration process of a control plane according to an embodiment of this application.
FIG. 10 shows a flowchart of an exemplary data transmission method provided by an embodiment of this application.
FIG. 11 shows a flowchart of another exemplary data transmission method provided by an embodiment of this application.
FIG. 12 shows a flowchart of yet another exemplary data transmission method provided by an embodiment of this application.
FIG. 13 shows a block diagram of a data transmission apparatus according to an embodiment of this application.
FIG. 14 shows a block diagram of another data transmission apparatus according to an embodiment of this application.
FIG. 15 shows a block diagram of yet another data transmission apparatus according to an embodiment of this application.
FIG. 16 shows a block diagram of still yet another data transmission apparatus according to an embodiment of this application.
FIG. 17 shows a schematic structural diagram of an electronic device according to an embodiment of this application.

### DETAILED DESCRIPTION

"Plurality of" mentioned in the embodiments of this application means two or more. The term and/or describes an association relationship for describing associated objects and represents that three association relationships may exist. For example, A and/or B may represent the following three association relationships: only A exists, both A and B exist, and only B exists. The character "/" generally indicates an "or" relationship between the associated objects.

The development in the field of communications (e.g. 4G (4th-Generation), 5G, etc.) promotes application of services requiring large data volume and short delay. Interactive services, such as cloud game services, VR, AR, MR, XR, and CR, may also be referred to as advanced interactive services (AIS), and in this application, a data packet of an advanced interactive service is referred to as an advanced interactive data packet.

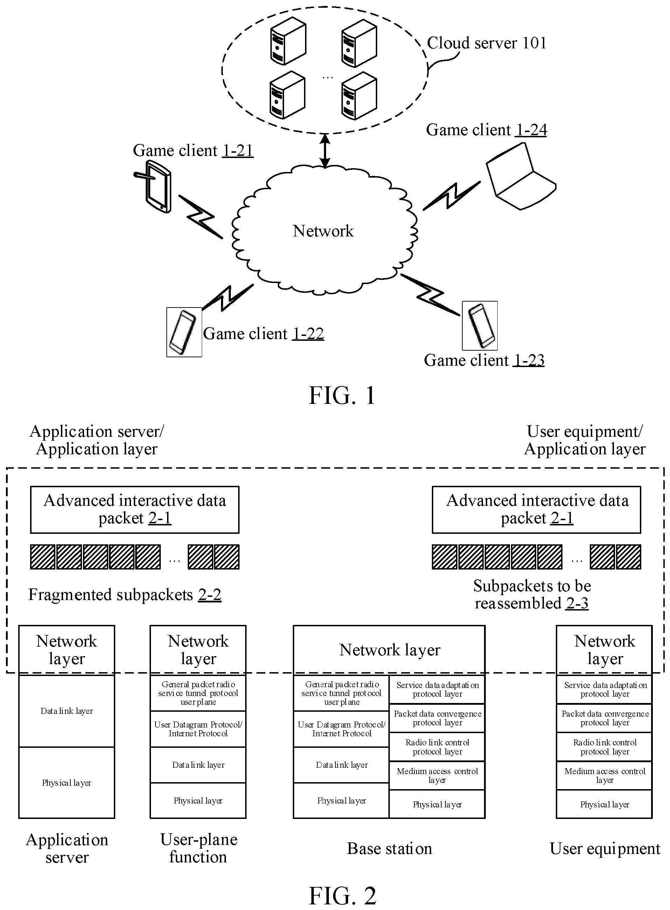

For example, in a cloud gaming scenario shown in FIG. 1, a cloud server 101 is configured to run a cloud game. The cloud server 101 may render a game picture, encode an audio signal and a rendered image, and finally transmit the encoded data to various game clients (illustratively shown are a game client 1-21, a game client 1-22, a game client 1-23, and a game client 1-24) via a network. A game client may be a user equipment (UE) having basic streaming media playing, human-computer interaction and communication capabilities, for example, a smart phone, a tablet computer, a laptop computer, a desktop computer, an intelligent television, a set-top box, an intelligent vehicle-mounted device, a portable music player, a personal digital assistant, a dedicated message device, a portable game device, a smart speaker, etc. Alternatively, a game client may also be an application program running in a terminal device, for example, a native program or software module in the operating system, a native application (APP), i.e., a program (a game APP) which needs to be installed in the operating system to run; an applet, i.e., a program that only needs to be downloaded into the browser environment to run, and can be embedded in any APP.

In the embodiments of this application, the game client may decode the encoded data transmitted by the cloud server 101 to obtain analogue audio and video signals to play. It is to be understood that FIG. 1 is merely an exemplary system architecture for characterizing a cloud gaming system and does not limit the specific architecture of the cloud gaming system. For example, a backend server for scheduling may also be included in the cloud gaming system, and so on. In addition, the cloud server 101 may be an independent physical server, or may be a server cluster or a distributed system formed by a plurality of physical servers, or may be a cloud server that provides basic cloud computing services such as a cloud service, a cloud database, cloud computing, a cloud function, cloud storage, a network service, cloud communication, a middleware service, a domain name service, a security service, a content delivery network (CDN), big data, and an AI platform. The game client and the cloud server 101 may be directly or indirectly connected in a wired or wireless communication manner. This is not limited in this application.

In the application scenario of various advanced interactive services, the large advanced interactive data packet needs to be fragmented into multiple subpackets for transmission. That is, as shown in FIG. 2, for example, in a 5G system, the user plane mainly includes an application server, a user plane function (UPF), a next generation nodeB (gNB), and a user equipment. In some service scenarios, the advanced interactive data packet is mainly transmitted in the downlink direction, for example, from the application server to the UPF, and then transmitted to the UE via the gNB. When transmitted, the advanced interactive data packet 2-1 is fragmented at the application layer of the application server. The fragmented subpackets 2-2 arrive at the UPF as Internet protocol (IP) packets from the application server, and then transmitted by the 5G system to the UE via a PDU session. Then, at the application layer of the UE, the subpackets are submitted upward layer-by-layer in the protocol stack and reassembled (the subpackets 2-3 to be reassembled are shown in the figure) to restore the advanced interactive data packet 2-1.

In the system shown in FIG. 2, the application server includes an L1 layer, an L2 layer, and an IP layer; the user plane function includes an L1 layer, an L2 layer, the user datagram protocol (UDP)/IP, a general packet radio service tunnel protocol user plane, and an IP layer; the next generation nodeB includes an L1 layer, an L2 layer, UDP/IP, GTP-U, a physical (PHY) layer, a medium access control (MAC) layer, a radio link control (RLC) protocol layer, a packet data convergence protocol (PDCP) layer, a service data adaptation protocol (SDAP) layer, and an IP layer; the user equipment includes a PHY layer, a MAC layer, a RLC layer, a PDCH layer, a SDAP layer, and an IP layer. Among others, the L1 layer refers to the physical layer for ensuring that original data can be transmitted via various physical media; the L2 layer refers to the data link layer that provides services to the network layer on the basis of services provided by the physical layer; the IP layer is the network layer for data transmission between two end systems.

In application scenarios of various advanced interactive services, an advanced interactive data packet generated by the application layer needs to be fragmented into a large number of subpackets and transmitted with a very low delay. Once the transmission of one of the subpackets does not meet the transmission requirements, the entire advanced interactive data packet cannot be restored and presented in real time at the receiver, and thus cannot meet the requirements of advanced interactive high-bandwidth services. In this case, the transmission of a large number of fragmented subpackets actually wastes network resources. For example, if an advanced interactive data packet is fragmented into 10 subpackets (or even more subpackets), and the probability of successful transmission of each subpacket is 0.99, then the probability of successful transmission of all the 10 subpackets is 0.99¹⁰, i.e., 0.904. Therefore, for an advanced interactive data packet fragmented into multiple subpackets, even if the probability of success transmission of each subpacket is very high, the probability of success transmission of all the fragmented subpackets of the entire advanced interactive data packet will be greatly reduced. In addition, if the transmission of a subpacket fails, the receiver cannot restore the advanced interactive data packet, and in this case, it is meaningless to go on transmitting the fragmented subpackets of the advanced interactive data packet. On this basis, embodiments of this application provide a data transmission method and apparatus, a computer-readable storage medium, an electronic device, and a computer program product, which can reduce the time delay and consumption of resources in transmission of data packets.

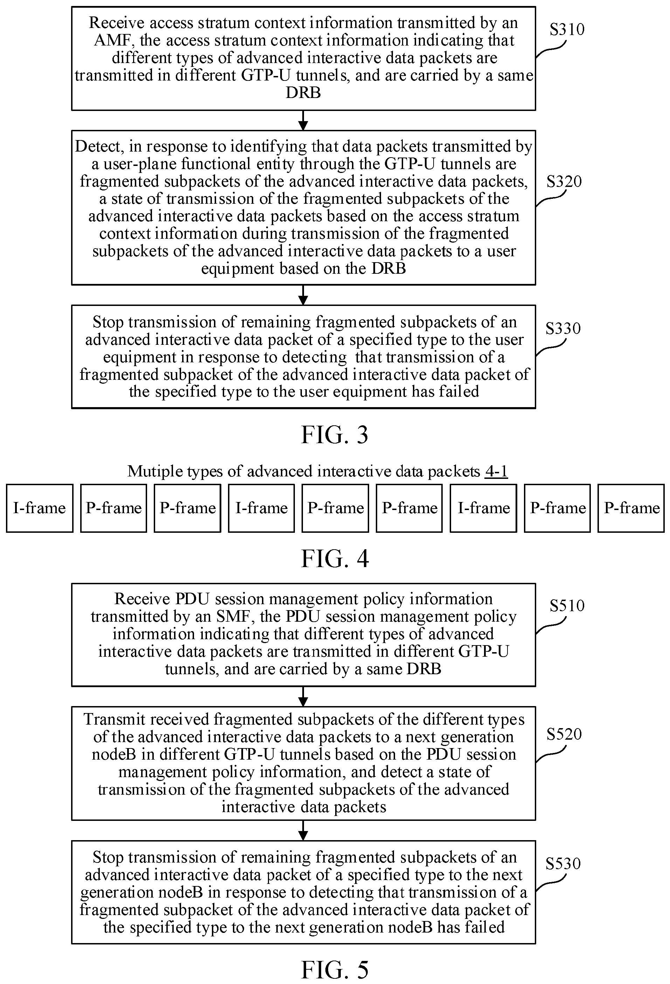

FIG. 3 shows a flowchart of a data transmission method that is performed by a next generation nodeB according to this application. Referring to FIG. 3, the data transmission method includes at least S310 to S330, each of which will be described below.

In S310, access stratum context information transmitted by an AMF is received, the access stratum context information indicating that different types of advanced interactive data packets are transmitted in different GTP-U tunnels, and are carried by a same DRB.

In a case that the next generation nodeB is divided into a control plane and a user plane, namely, the next generation nodeB is divided into a gNB centralized unit (gNB-CU) and a next generation nodeB distributed unit (gNB Distributed Unit, gNB-DU), with the gNB-CU serving as the control plane and the gNB-DU serving as the user plane, then the next generation nodeB in this application may be the gNB-DU.

In this application, a type of an advanced interactive data packet may be determined based on the type and/or priority and/or the like of the content of the service to be transmitted. For example, the types of the advanced interactive data packets may include key frames and non-key frames, where the key frame may be an intra picture frame (I-frame), and the non-key frame may be a predictive frame (P-frame) and/or a bi-directional interpolated prediction frame (B-frame).

In an embodiment of this application, multiple types of advanced interactive data packets are transmitted in different GTP-U tunnels as follows: one type of advanced interactive data packet is transmitted in one GTP-U tunnel, and different types of advanced interactive data packets are transmitted using different GTP-U tunnels.

In S320, in response to identifying that data packets transmitted by a user-plane functional entity through the GTP-U tunnels are fragmented subpackets of the advanced interactive data packets, a state of transmission of the fragmented subpackets of the advanced interactive data packets is detected based on the access stratum context information during transmission of the fragmented subpackets of the advanced interactive data packets to a user equipment based on the DRB.

In an embodiment of this application, the user-plane functional entity transmits different types of advanced interactive data packets in different GTP-U tunnels, namely, the GTP-U tunnels used for transmitting different types of advanced interactive data packets are different. The next generation nodeB may receive the data packets transmitted by the user-plane functional entity in different GTP-U tunnels, and after receiving the data packets, may also identify whether each data packet is a fragmented subpacket of an advanced interactive data packet. Alternatively, the next generation nodeB may also identify the type of the advanced interactive data packet based on the GTP-U tunnel in which the fragmented subpacket of the advanced interactive data packet is received. For example, the identification information of the GTP-U tunnel may be associated with the type of the advanced interactive data packet, and then the type of the received advanced interactive data packet may be determined based on the identification information of the GTP-U tunnel in which the fragmented subpacket of the advanced interactive data packet is received.

In an embodiment of this application, assuming that there are two types of advanced interactive data packets, i.e., the advanced interactive data packets corresponding to key frames and the advanced interactive data packets corresponding to non-key frames, then the user-plane functional entity may transmit the two types of advanced interactive data packets in two GTP-U tunnels, which may be the case that the fragmented subpackets of the advanced interactive data packets corresponding to key frames are transmitted in one GTP-U tunnel, and the fragmented subpackets of the advanced interactive data packets corresponding to non-key frames are transmitted in the other GTP-U tunnel.

In an embodiment of this application, a plurality of subpackets are created by fragmentation of each advanced interactive data packet, including a start data packet and an end data packet. The start data packet includes first indication information indicating that the start data packet is transmitted first in the plurality of subpackets; the end data packet includes second indication information indicating that the end data packet is transmitted last in the plurality of subpackets.

In an embodiment of this application, the next generation nodeB determines whether fragmented subpackets of an advanced interactive data packet are received by identifying the start data packet and the end data packet. For example, if the next generation nodeB identifies the start data packet based on the first indication information contained in the start data packet, then the data packets received between the start data packet and the end data packet are all fragmented subpackets of the advanced interactive data packet.

In an embodiment of this application, the next generation nodeB may identify whether a received data packet is a fragmented subpacket of an advanced interactive data packet based on indication information contained in a protocol field of the received data packet.

A start data packet in a plurality of fragmented subpackets of an advanced interactive data packet is added in the protocol field with indication information indicating that it is a start data packet, and an end data packet is added in the protocol field with indication information indicating that it is an end data packet. Then, after the next generation nodeB identifies the start data packet based on the protocol field of the data packet, the data packets received between the start data packet and the end data packet are all fragmented subpackets of the advanced interactive data packet.

In an embodiment of this application, the next generation nodeB may identify whether a received data packet is a fragmented subpacket of an advanced interactive data packet based on indication information contained in payload information of the received data packet.

For example, a start data packet in a plurality of fragmented subpackets of an advanced interactive data packet is added in the payload information with indication information indicating that it is a start data packet, and an end data packet is added in the payload information with indication information indicating that it is an end data packet. Then, after the start data packet is identified based on the payload information of the data packet, the data packets between the start data packet and the end data packet are all fragmented subpackets of the advanced interactive data packet.

Still referring to FIG. 3, in S330, transmission of remaining fragmented subpackets of an advanced interactive data packet of a specified type to the user equipment is stopped in response detecting that transmission of a fragmented subpacket of the advanced interactive data packet of the specified type to the user equipment has failed.

In an embodiment of this application, if the next generation nodeB detects that a fragmented subpacket of an advanced interactive data packet of a specified type is a subpacket that has failed to be transmitted to the user equipment, then the advanced interactive data packet of the specified type cannot be restored even if the transmission of the remaining fragmented subpackets of the advanced interactive data packet of the specified type are transmitted. Therefore, the next generation nodeB may stop transmitting the remaining subpackets to the user equipment so as to reduce the occupation of bandwidth, which is beneficial to reduce the occupation of transmission resources by the advanced interactive data packet during transmission.

In an embodiment of this application, if a fragmented subpacket of an advanced interactive data packet is a subpacket that has failed to be transmitted to the user equipment, then the advanced interactive data packet is an advanced interactive data packet of a specified type. In other words, the advanced interactive data packet of the specified type is an advanced interactive data packet having a subpacket that has failed to be transmitted. The specified type is any one of a plurality of types.

In an embodiment of this application, the different types of advanced interactive data packets include two types of advanced interactive data packets, and the two types of advanced interactive data packets are advanced interactive data packets corresponding to key frames and advanced interactive data packet corresponding to non-key frames. If an advanced interactive data packet corresponding to a non-key frame being transmitted has a subpacket that has failed to be transmitted, the advanced interactive data packet corresponding to the non-key frame is an advanced interactive data packet of the specified type; if an advanced interactive data packet corresponding to a key frame being transmitted has a subpacket that has failed to be transmitted, the advanced interactive data packet corresponding to the key frame is an advanced interactive data packet of the specified type.

In an embodiment of this application, in detection of whether a fragmented subpacket of an advanced interactive data packet is a subpacket that has failed to be transmitted to the user equipment, the next generation nodeB may individually detect fragmented subpackets of multiple types of advanced interactive data packets, and the detections for the fragmented subpackets of multiple types of advanced interactive data packets do not affect each other. At the same time, the transmissions of the fragmented subpackets of multiple types of advanced interactive data packets may also do not affect each other. For example, if the transmission of a fragmented subpacket of an advanced interactive data packet of a certain type to the user equipment has failed, the transmission of the remaining fragmented subpackets of the advanced interactive data packet of the specified type to the user equipment may be stopped, but this process does not affect the transmission of fragmented subpackets of advanced interactive data packets of other types, that is to say, the transmission of fragmented subpackets of advanced interactive data packets of other types may continue.

In an embodiment of this application, if the next generation nodeB detects that transmission of a fragmented subpacket of an advanced interactive data packet of a specified type to the user equipment has failed, then received fragmented subpackets of the advanced interactive data packet of the specified type may be discarded, so as to reduce the occupation of storage resources.

In an embodiment of this application, if the next generation nodeB detects that transmission of a fragmented subpacket of an advanced interactive data packet of a specified type to the user equipment has failed, a first feedback message may be transmitted to a user-plane functional entity, the first feedback message being used for instructing the user-plane functional entity to stop transmission of remaining fragmented subpackets of the advanced interactive data packet of the specified type.

It is to be understood that when the next generation nodeB detects that there is a subpacket that has failed to be transmitted in the process of transmitting an advanced interactive data packet of a specified type to the user equipment, the next generation nodeB may transmit a first feedback message to the user-plane functional entity so as to instruct the user-plane functional entity to stop transmitting the remaining fragmented subpackets of the advanced interactive data packet of the specified type, so as to reduce the occupation of transmission resources.

In an embodiment of this application, the next generation nodeB transmits the first feedback message to the user-plane functional entity in response to determining that not all fragmented subpackets of the advanced interactive data packet of the specified type are completely received; if all fragmented subpackets of the advanced interactive data packet of the specified type have been completely received, then there is no need to transmit the first feedback message to the user-plane functional entity.

In an embodiment of this application, if the next generation nodeB does not completely receive all fragmented subpackets of the advanced interactive data packet of the specified type transmitted by the user-plane functional entity within a preset duration, the next generation nodeB stops transmission of remaining fragmented subpackets of the advanced interactive data packet of the specified type to the user equipment, and discards received fragmented subpackets of the advanced interactive data packet of the specified type.

The advanced interactive data packet may be a data packet with a time limit. If the next generation nodeB does not completely receive all the fragmented subpackets of the advanced interactive data packet of the specified type transmitted by the user-plane functional entity within a preset duration, it indicates that the advanced interactive data packet of the specified type has exceeded the time limit, and then the next generation nodeB no longer needs to transmit the remaining fragmented subpackets of the advanced interactive data packet of the specified type to the user equipment. Of course, if not all fragmented subpackets of the advanced interactive data packet of the specified type transmitted by the user-plane functional entity are completely received within a preset duration, it is also possible that the user-plane functional entity detects a subpacket transmission error and then stops the transmission, then it also indicates that the next generation nodeB no longer needs to transmit the remaining fragmented subpackets of the advanced interactive data packet of the specified type to the user equipment. In this case, the transmission of the remaining fragmented subpackets of the advanced interactive data packet of the specified type to the user equipment may be stopped, and the received fragmented subpackets of the advanced interactive data packet of the specified type may be discarded.

In an embodiment of this application, as shown in FIG. 4, multiple types of advanced interactive data packets 4-1 may include: advanced interactive data packets corresponding to key frames (I-frames shown in FIG. 4) and advanced interactive data packets corresponding to non-key frames (P-frames shown in FIG. 4).

As the restoration of non-key frames relies on key frames, if the next generation nodeB detects that the transmission of a fragmented subpacket of an advanced interactive data packet corresponding to a key frame to the user equipment has failed, the next generation nodeB stops transmission of an advanced interactive data packet corresponding to a non-key frame associated with the key frame to the user equipment, and/or discards a received advanced interactive data packet corresponding to the non-key frame associated with the key frame.

It is to be understood that when the transmission of a fragmented subpacket of an advanced interactive data packet corresponding to a key frame has failed, the next generation nodeB not only stops transmission of remaining fragmented subpackets of the advanced interactive data packet corresponding to the key frame, but also stops transmission of an advanced interactive data packet corresponding to a non-key frame associated with the specified key frame. That is to say, the next generation nodeB stops the transmission of the remaining fragmented subpackets of the advanced interactive data packet corresponding to the non-key frame associated with the key frame. In this way, the bandwidth occupation of invalid subpackets can be reduced, which is beneficial to reduce the occupation of transmission resources by the advanced interactive data packet during transmission.

FIG. 3 illustrates the data transmission method of this application from the perspective of the next generation nodeB. A data transmission method of an embodiment of this application is described below from the perspective of a user-plane functional entity.

FIG. 5 shows a flowchart of another data transmission method that is performed by a user-plane functional entity according to this application. Referring to FIG. 5, the data transmission method includes at least S510 to S530, each of which will be described below.

In S510, PDU session management policy information transmitted by an SMF is received, the PDU session management policy information indicating that different types of advanced interactive data packets are transmitted in different GTP-U tunnels, and are carried by a same DRB.

In an embodiment of this application, the type of the advanced interactive data packet may be determined based on the type and/or priority, etc., of the content of the service to be transmitted. For example, the types of the advanced interactive data packets may include key frames and non-key frames, where the key frame may be an I-frame, and the non-key frame may be a P-frame and/or a B-frame.

In S520, received fragmented subpackets of the different types of the advanced interactive data packets are transmitted to a next generation nodeB in different GTP-U tunnels based on the PDU session management policy information, and a state of transmission of the fragmented subpackets of the advanced interactive data packets is detected.

In an embodiment of this application, a plurality of subpackets are created by fragmentation of the advanced interactive data packet, including a start data packet and an end data packet. The start data packet includes first indication information indicating that the start data packet is transmitted first in the plurality of subpackets; the end data packet includes second indication information indicating that the end data packet is transmitted last in the plurality of subpackets.

It is to be understood that the user-plane functional entity determines whether fragmented subpackets of an advanced interactive data packet are received by identifying the start data packet and the end data packet. For example, if the user-plane functional entity identifies the start data packet based on the first indication information contained in the start data packet, then the data packets between the start data packet and the end data packet are all fragmented subpackets of the advanced interactive data packet.

In an embodiment of this application, the user-plane functional entity may identify whether a received data packet is a fragmented subpacket of an advanced interactive data packet based on indication information contained in a protocol field of the received data packet.

A start data packet in a plurality of fragmented subpackets of an advanced interactive data packet is added in the protocol field with indication information indicating that it is a start data packet, and an end data packet is added in the protocol field with indication information indicating that it is an end data packet. Then, after the user-plane functional entity identifies the start data packet based on the protocol field of the data packet, the data packets received between the start data packet and the end data packet are all fragmented subpackets of the advanced interactive data packet.

In an embodiment of this application, the user-plane functional entity may identify whether a received data packet is a fragmented subpacket of an advanced interactive data packet based on indication information contained in payload information of the received data packet.

For example, a start data packet in a plurality of fragmented subpackets of an advanced interactive data packet is added in the payload information with indication information indicating that it is a start data packet, and an end data packet is added in the payload information with indication information indicating that it is an end data packet. Then, after the start data packet is identified based on the payload information of the data packet, the data packets received between the start data packet and the end data packet are all fragmented subpackets of the advanced interactive data packet.

In S530, transmission of remaining fragmented subpackets of an advanced interactive data packet of a specified type to the next generation nodeB is stopped in response to detecting that transmission of a fragmented subpacket of the advanced interactive data packet of the specified type to the next generation nodeB has failed.

In an embodiment of this application, if the user-plane functional entity detects that a fragmented subpacket of an advanced interactive data packet of a specified type is a subpacket that has failed to be transmitted to the next generation nodeB, then it is meaningless to go on transmitting the remaining fragmented subpackets of the advanced interactive data packet of the specified type. Therefore, the user-plane functional entity may stop transmitting the remaining subpackets to the next generation nodeB so as to reduce the occupation of bandwidth, which is beneficial to reduce the occupation of transmission resources by the advanced interactive data packet during transmission.

In an embodiment of this application, if the user-plane functional entity detects that a fragmented subpacket of an advanced interactive data packet of a specified type is a subpacket that has failed to be transmitted to the next generation nodeB, then received fragmented subpackets of the advanced interactive data packet of the specified type may be discarded, so as to reduce the occupation of storage resources.

In an embodiment of this application, if the user-plane functional entity detects that a fragmented subpacket of an advanced interactive data packet of a specified type is a subpacket that has failed to be transmitted to the next generation nodeB, a second feedback message may be transmitted to an application server, the second feedback message instructing the application server to stop transmission of remaining fragmented subpackets of the advanced interactive data packet to the application server.

It is to be understood that when the user-plane functional entity detects that there is a subpacket that has failed to be transmitted in the process of transmitting an advanced interactive data packet of a specified type to the next generation nodeB, the user-plane functional entity may transmit a second feedback message to the application server so as to instruct the application server to stop transmitting the remaining fragmented subpackets, so as to reduce the occupation of transmission resources.

In an embodiment of this application, the user-plane functional entity transmits the second feedback message to the application server in response to determining that not all fragmented subpackets of the advanced interactive data packet of the specified type are completely received; if all the fragmented subpackets of the advanced interactive data packet of the specified type have been completely received, then there is no need to transmit the second feedback message to the application server.

In an embodiment of this application, if the user-plane functional entity, in response to determining that not all fragmented subpackets of the advanced interactive data packet of the specified type transmitted by the application server are completely received within a preset duration, stops transmission of remaining fragmented subpackets of the advanced interactive data packet of the specified type to the next generation nodeB, and discards received fragmented subpackets of the advanced interactive data packet of the specified type.

The advanced interactive data packet may be a data packet with a time limit. If the user-plane functional entity does not completely receive all the fragmented subpackets of the advanced interactive data packet of the specified type transmitted by the application server within the preset duration, it indicates that the advanced interactive data packet has exceeded the time limit, and then the user-plane functional entity no longer needs to transmit the remaining fragmented subpackets to the next generation nodeB. Of course, if the user-plane functional entity does not receive all the fragmented subpackets of the advanced interactive data packet of the specified type transmitted by the application server within a preset duration, it is also possible that the application server detects a subpacket transmission error and then stops the transmission, then it also indicates that the user-plane functional entity no longer needs to transmit the remaining fragmented subpackets to the next generation nodeB. In this case, the user-plane functional entity may also stop transmission of the remaining fragmented subpackets of the advanced interactive data packet of the specified type to the next generation nodeB, and discard the received fragmented subpackets of the advanced interactive data packet of the specified type.

In an embodiment of this application, if the different types of advanced interactive data packets include advanced interactive data packets corresponding to key frames and advanced interactive data packets corresponding to non-key frames, as the restoration of non-key frames relies on key frames, if it is detected that a fragmented subpacket of an advanced interactive data packet corresponding to a specified key frame is a subpacket that has failed to be transmitted to the next generation nodeB, the transmission of an advanced interactive data packet corresponding to a non-key frame associated with the key frame to the next generation nodeB may be stopped, and/or a received advanced interactive data packet corresponding to a non-key frame associated with the key frame may be discarded.

It is to be understood that when there is a fragmented subpacket that has failed to be transmitted in a plurality of fragmented subpackets of an advanced interactive data packet corresponding to a key frame, not only the transmission of remaining fragmented subpackets of the advanced interactive data packet corresponding to the specified key frame is stopped, but also the transmission of an advanced interactive data packet corresponding to a non-key frame associated with the specified key frame is stopped. That is to say, the transmission of the remaining fragmented subpackets of the advanced interactive data packet corresponding to the associated non-key frame is stopped. In this way, the bandwidth occupation of invalid data packets can be reduced, which is beneficial to reduce the occupation of transmission resources by the advanced interactive data packet during transmission.

A data transmission method of an embodiment of this application is described below from the perspective of a user equipment, this data transmission method is not part of the present invention.

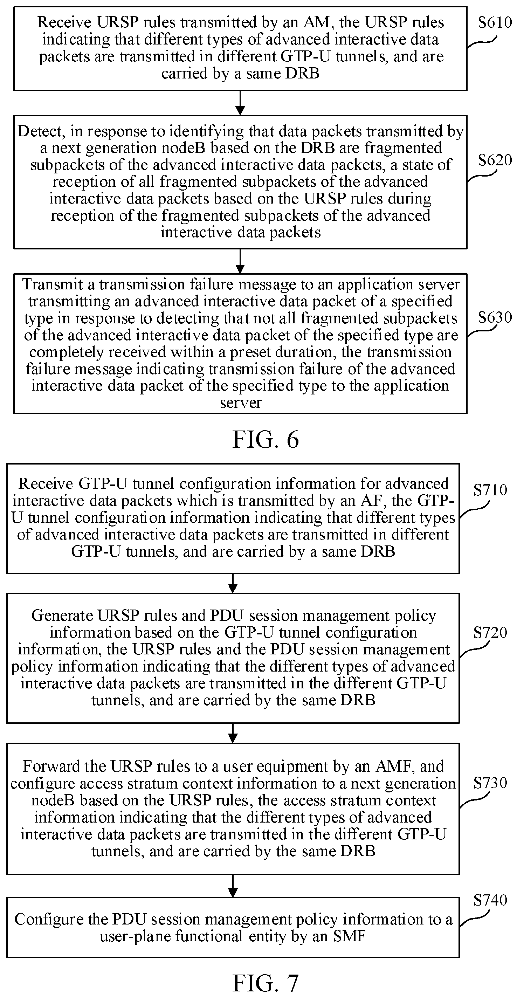

FIG. 6 shows a flowchart of yet another data transmission method that may be performed by a user equipment based on an embodiment of this application. Referring to FIG. 6, the data transmission method includes at least S610 to S630, each of which will be described below.

In S610, URSP rules transmitted by an AMF are received, the URSP rules indicating that different types of advanced interactive data packets are transmitted in different GTP-U tunnels, and are carried by a same DRB.

In S620, in response to identifying that data packets transmitted by a next generation nodeB based on the DRB are fragmented subpackets of the advanced interactive data packets, a state of reception of all fragmented subpackets of the advanced interactive data packets is detected based on the URSP rules during reception of the fragmented subpackets of the advanced interactive data packets.

In an embodiment of this application, a plurality of subpackets are created by fragmentation of the advanced interactive data packet, including a start data packet and an end data packet. The start data packet includes first indication information indicating that the start data packet is transmitted first in the plurality of subpackets; the end data packet includes second indication information indicating that the end data packet is transmitted last in the plurality of subpackets.

It is to be understood that the user equipment determines whether fragmented subpackets of an advanced interactive data packet is received by recognizing the start data packet and the end data packet. For example, if the user equipment recognizes the start data packet based on the first indication information contained in the start data packet, then the data packets between the start data packet and the end data packet are all fragmented subpackets of the advanced interactive data packet.

In an embodiment of this application, the user equipment may recognize whether a received data packet is a fragmented subpacket of an advanced interactive data packet based on indication information contained in a protocol field of the received data packet.

A start data packet in a plurality of fragmented subpackets of an advanced interactive data packet is added in the protocol field with indication information indicating that it is a start data packet, and an end data packet is added in the protocol field with indication information indicating that it is an end data packet. Then, after the user equipment recognizes the start data packet based on the protocol field of the data packet, the data packets received between the start data packet and the end data packet are all fragmented subpackets of the advanced interactive data packet.

In an embodiment of this application, the user equipment may recognize whether a received data packet is a fragmented subpacket of an advanced interactive data packet based on indication information contained in payload information of the received data packet.

For example, a start data packet in a plurality of fragmented subpackets of an advanced interactive data packet is added in the payload information with indication information indicating that it is a start data packet, and an end data packet is added in the payload information with indication information indicating that it is an end data packet. Then, after the start data packet is recognized based on the payload information of the data packet, the data packets received between the start data packet and the end data packet are all fragmented subpackets of the advanced interactive data packet.

In S630, a transmission failure message is transmitted to an application server transmitting an advanced interactive data packet of a specified type in response to detecting that not all fragmented subpackets of the advanced interactive data packet of the specified type are completely received within a preset duration, the transmission failure message indicating transmission failure of the advanced interactive data packet of the specified type to the application server.

In an embodiment of this application, when performing integration processing on all the fragmented subpackets of the advanced interactive data packet of the specified type, the user equipment may perform the integration processing based on the order of the subpackets, and finally obtain a complete advanced interactive data packet.

In this embodiment of this application, if the user equipment does not completely receive all the fragmented subpackets of the advanced interactive data packet of the specified type within a preset duration, the received fragmented subpackets of the advanced interactive data packet of the specified type may be discarded.

The advanced interactive data packet may be a data packet with a time limit. If the user equipment does not completely receive all the fragmented subpackets of the advanced interactive data packet of the specified type within the preset duration, it indicates that the advanced interactive data packet of the specified type has exceeded the time limit, and then the user equipment no longer needs to receive the remaining fragmented subpackets of the advanced interactive data packet of the specified type and perform the integration processing. Therefore, the user equipment may discard the received fragmented subpackets of the advanced interactive data packet of the specified type. Of course, if not all the fragmented subpackets of the advanced interactive data packet of the specified type are completely received within the preset duration, it is also possible that the next generation nodeB detects a subpacket transmission error and then stops the transmission, and then the user-plane functional entity may discard the received fragmented subpackets of the advanced interactive data packet of the specified type.

In an embodiment of this application, if the user equipment does not completely receive all the fragmented subpackets of the advanced interactive data packet of the specified type within a preset duration, a transmission failure message is transmitted to an application server transmitting the advanced interactive data packet of the specified type for indicating transmission failure of the advanced interactive data packet.

It is to be understood that the technical solution of this embodiment allows the user equipment to transmit a transmission failure message to the application server upon detection that not all the fragmented subpackets of the advanced interactive data packet of the specified type are completely received within a preset duration, so as to indicate transmission failure of the advanced interactive data packet of the specified type to the application server, so that the application server can confirm whether to retransmit.

A data transmission method of an embodiment of this application is described below from the perspective of a policy control function (PCF), this data transmission method is not part of the present invention.

FIG. 7 shows a flowchart of yet another data transmission method that may be performed by a PCF according to an embodiment of this application. Referring to FIG. 7, the data transmission method includes at least S710 to S740, each of which will be described below.

In S710, GTP-U tunnel configuration information for advanced interactive data packets which is transmitted by an AF is received, the GTP-U tunnel configuration information indicating that different types of advanced interactive data packets are transmitted in different GTP-U tunnels, and are carried by a same DRB.

In an embodiment of this application, the AF may directly send the GTP-U tunnel configuration information for advanced interactive data packets to the PCF, or the AF may send the GTP-U tunnel configuration information for advanced interactive data packets to the PCF via a network exposure function (NEF).

In S720, URSP rules and PDU session management policy information are generated based on the GTP-U tunnel configuration information, the URSP rules and the PDU session management policy information indicating that the different types of advanced interactive data packets are transmitted in the different GTP-U tunnels, and are carried by the same DRB.

In S730, the URSP rules are forwarded to a user equipment by an AMF, and access stratum context information is configured to a next generation nodeB based on the URSP rules, the access stratum context information indicating that the different types of advanced interactive data packets are transmitted in the different GTP-U tunnels, and are carried by the same DRB.

In an embodiment of this application, the AMF may directly forward the URSP rules to the user equipment; at the same time, the AMF may generate the access stratum context information to be configured to the next generation nodeB based on the URSP rules and transmits the access stratum context information to the next generation nodeB.

In S740, the PDU session management policy information is configured to a user-plane functional entity by an SMF.

In an embodiment of this application, the SMF may directly forward the PDU session management policy information to the user-plane functional entity.

The PCF configures the PDU session management policy information to the user-plane functional entity, and as such, upon detection that the transmission of a fragmented subpacket of an advanced interactive data packet of a specified type to the next generation nodeB has failed based on the PDU session management policy information, the user-plane functional entity stops transmitting the remaining fragmented subpackets of the advanced interactive data packet of the specified type to the next generation nodeB, so as to reduce the occupation of transmission resources. The PCF forwards the URSP rules to the user equipment, and as such, based on the URSP rules, when the user equipment detects that not all the fragmented subpackets of the advanced interactive data packet of the specified type are completely received within a preset duration, the user equipment sends a transmission failure message to an application server transmitting the advanced interactive data packet of the specified type, so as to reduce the occupation of transmission resources. The PCF forwards the access stratum context information to the next generation nodeB, and as such, when the next generation nodeB detects, based on the access stratum context information, that the transmission of a fragmented subpacket of an advanced interactive data packet of a specified type to the user equipment has failed, the next generation nodeB stops transmitting the remaining fragmented subpackets of the advanced interactive data packet of the specified type to the user equipment, so as to reduce the occupation of transmission resources.

The data transmission methods of the embodiments of this application are described above from the perspectives of the user-plane functional entity, the next generation nodeB, the user equipment, and the PCF. A data transmission method of an embodiment of this application will be described below from the perspective of interaction between entities.

In an embodiment of this application, an application server may classify advanced interactive data packets into two types (taking two types as an example, and it may also be two or more types) at an application layer, for example, I-frames and P-frames, and then the two types of advanced interactive data packets are an I-frame stream and a P-frame stream. The application server transmits the I-frame stream and the P-frame stream. Through the inter-layer interaction mechanism, the classification information is put in the message header. In an embodiment of this application, the classification may also not be performed based on I-frames and P-frames, but on other rules, for example, on the priority of contents of audio and video streams, etc.

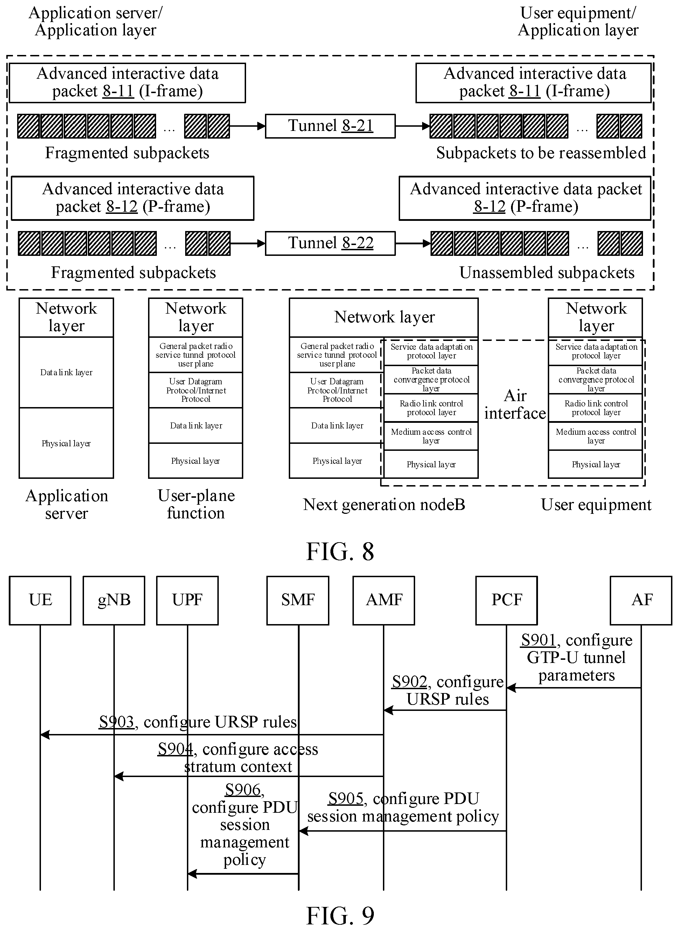

In an embodiment of this application, an AF may interact with a PCF, and then the PCF interacts with various network elements (such as AMF, SMF, etc.) to configure GTP-U tunnels for the two streams. As shown in FIG. 8, an I-frame advanced interactive data packet 8-11 and a P-frame advanced interactive data packet 8-12 are distinguished in an application layer and fragmented, and then put into different GTP-U tunnels (tunnel 8-21 and tunnel 8-22). After arriving at the gNB, they are transmitted downlink using the same DRB, and have unified packet numbers in the same DRB. In addition, when scheduling data transmission, the gNB gives the priority to the transmission of the I-frame stream (namely, a plurality of fragmented subpackets of an I-frame advanced interactive data packet). If packet loss occurs in the I-frame stream, the transmission of the fragmented subpackets of the I-frame advanced interactive data packet to the user equipment is stopped, and the received fragmented subpackets of the I-frame advanced interactive data packet and the fragmented subpackets of the subsequent P-frame advanced interactive data packet are discarded (if the I-frame is lost, the picture cannot be restored even if the P-frame is received).

In an embodiment of this application, after an advanced interactive data packet of any type is fragmented, the start and end of the fragmented subpackets of the advanced interactive data packet of the type may be marked. Based on the marked start subpacket (referred to as a start data packet) and an end subpacket (referred to as an end data packet), if the transmission of some subpackets in the N fragmented subpackets of the advanced interactive data packet has failed, then the subsequent subpackets do not need to be transmitted any more, and can be discarded; where N is a positive integer greater than 1.

In an embodiment of this application which is not part of this invention, before managing the transmission of the subpackets, a configuration process for a control plane needs to be performed to enable the UE and each network element to obtain transmission parameters of the advanced interactive data packet, as shown in FIG. 9, including S901 to S906.

In S901, the AF configures GTP-U tunnel parameters (referred to as GTP-U tunnel configuration information) to the PCF.

In an embodiment of this application, the AF may configure the GTP-U tunnel parameters by configuring a PDU session policy of the advanced interactive data packet to the PCF. The AF may directly transmit the PDU session policy of the advanced interactive data packet to the PCF, or the AF may also transmit the PDU session policy of the advanced interactive data packet to the PCF via an NEF. The GTP-U tunnel parameters indicate that different types of advanced interactive data packets are transmitted in different GTP-U tunnels, and are carried by a same DRB.

In S902, the PCF configures URSP rules to the AMF.

In an embodiment of this application, the URSP rules configured by the PCF to the AMF are related to the PDU session policy, and indicate that different types of advanced interactive data packets are transmitted in different GTP-U tunnels, and are carried by a same DRB.

In S903, the AMF configures the URSP rules to a UE.

In an embodiment of this application, the URSP rules configured by the AMF to the UE include: different types of advanced interactive data packets are transmitted in different GTP-U tunnels, and are carried by a same DRB.

In S904, the AMF configures an access stratum context (access stratum context information) to the gNB.

In an embodiment of this application, the access stratum (AS) context configured by the AMF to the gNB is related to the PDU session policy, which is a policy that different types of advanced interactive data packets are transmitted in different GTP-U tunnels, and are carried by a same DRB.

In S905, the PCF configures a PDU session management policy (referred to as PDU session management policy information) to the SMF.

In an embodiment of this application, the PDU session management policy includes a policy that different types of advanced interactive data packets are transmitted in different GTP-U tunnels, and are carried by a same DRB.

In S906, the SMF configures the PDU session management policy to the UPF.

After the configuration of the control plane is completed, the fragmented transmission (i.e., fragmented into subpackets for transmission) of the advanced interactive data packet needs to follow the following principles: for a plurality of fragmented IP subpackets (referred to as a plurality of subpackets) of a huge IP packet (namely, the advanced interactive data packet), if the transmission of some of the IP subpackets fail, then the IP subpackets which have been transmitted successfully are discarded even if they have been received by the receiver; if there are still some IP subpackets not transmitted, the sender stops the transmission, so as to start the transmission of the next advanced interactive data packet as soon as possible.

If the application server or the user equipment retransmits the advanced interactive data packet at the application layer, the retransmitted advanced interactive data packet may be determined as a new advanced interactive data packet for transmission, and the specific transmission mode is consistent with the data transmission mode provided in this embodiment of this application.

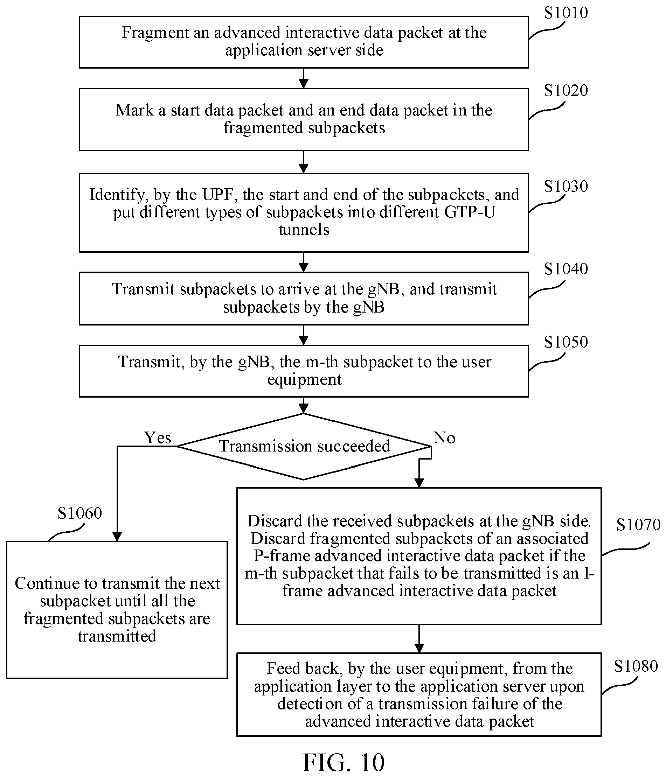

In an embodiment of this application which is not part of this invention, as shown in FIG. 10, a flowchart of an exemplary data transmission method provided by an embodiment of this application may include S1010 to S1080.

In S1010, an advanced interactive data packet is fragmented at the application server side.

In an embodiment of this application, the application server may determine a subpacket size based on information such as a preset subpacket size or the state of the network, and then fragment the advanced interactive data packet based on the subpacket size to obtain a plurality of subpackets.

In S1020, a start data packet and an end data packet in the fragmented subpackets are marked.

In an embodiment of this application, indication information may be added to the start packet and the end packet to indicate which subpacket is the start packet and which subpacket is the end packet. The indication information may be added in a protocol field or payload information of the subpacket, such as in a field of the GTP-U tunneling protocol.

In S1030, the UPF identifies the start and end of the subpackets, and puts different types of subpackets into different GTP-U tunnels.

In an embodiment of this application, during transmission of the fragmented subpackets by the application server to a UPF, the UPF may identify a start packet and an end packet therein.

In S 1040, the subpackets arrive at the gNB, and transmitted by the gNB.

In an embodiment of this application, after receiving the subpackets transmitted by the application server, the UPF transmits the subpackets to the gNB, and then the gNB transmits the subpackets to the user equipment. The gNB needs to perform augmentation to identify the indication information in the subpacket to determine a start data packet and an end data packet, so as to identify a series of fragmented subpackets of the advanced interactive data packet. At the same time, the gNB puts different types of subpackets received from different GTP-U tunnels into the same DRB for transmission to the user equipment.

In S1050, the gNB transmits the m-th subpacket to the user equipment.

M is a positive integer variable. The gNB judges whether the m-th subpacket is successfully transmitted; if so, S1060 is performed; if not, S1070 is performed. In addition, the gNB may also judge whether the m-th subpacket meets the delay requirement; if so, S 1060 is performed; if not, S1070 is performed.

In an embodiment of this application, the gNB may transmit subpackets to the user equipment via an air interface (Uu interface). Meanwhile, the success and failure of data transmission may be judged through the protocols of the Uu interface, such as PDCP, RLC, etc.

In S1060, continue to transmit the next subpacket until all the fragmented subpackets are transmitted.

In S 1070, the received subpackets are discarded at the gNB side. The remaining subpackets transmitted by the UPF are not transmitted to the user equipment any more. If the m-th subpacket that fails to be transmitted is an I-frame advanced interactive data packet, then fragmented subpackets of an associated P-frame advanced interactive data packet are also discarded.

In S 1080, the user equipment feeds back from the application layer to the application server upon detection of a transmission failure of the advanced interactive data packet. Alternatively, the transmission failure of an advanced interactive data packet of a specified type may be determined if the user equipment does not completely receive all the subpackets of the advanced interactive data packet within a certain time limit (referred to as a preset duration). The information fed back to the application server is used for indicating that the transmission of the advanced interactive data packet of the specified type has failed.

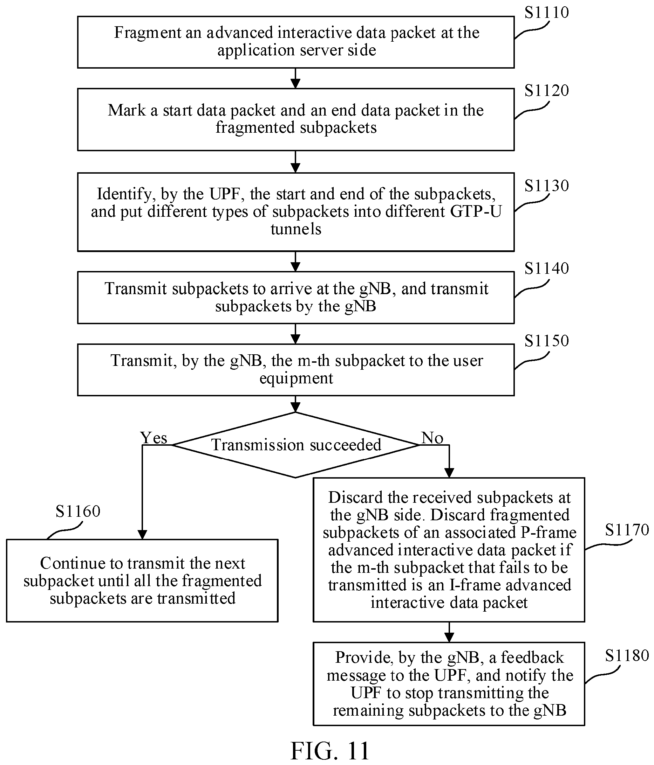

The data transmission method shown in FIG. 10 describes a process in which the user equipment indicates a transmission failure of an advanced interactive data packet from the application layer to the application server. In an embodiment of this application which is not part of this invention, the gNB may also indicate the state of transmission of an advanced interactive data packet to the UPF. As shown in FIG. 11, a data transmission method includes S1110 to S1180.

In S1110, an advanced interactive data packet is fragmented at the application server side.

In an embodiment of this application, the application server may determine a subpacket size based on information such as a preset subpacket size or the state of the network, and then fragment the advanced interactive data packet based on the subpacket size to obtain a plurality of subpackets.

In S1120, a start data packet and an end data packet in the fragmented subpackets are marked.

In an embodiment of this application, indication information may be added to the start packet and the end packet to indicate which subpacket is the start packet and which subpacket is the end packet. The indication information may be added in a protocol field or payload information of the data packet, such as in a field of the GTP-U tunneling protocol.

In S1130, the UPF identifies the start and end of the subpackets, and puts different types of subpackets into different GTP-U tunnels.

In an embodiment of this application, during transmission of the fragmented subpackets by the application server to a UPF, the UPF may identify a start packet and an end packet therein.

In S1140, the subpackets are transmitted to arrive at the gNB, and transmitted by the gNB.

In an embodiment of this application, after receiving the subpackets transmitted by the application server, the UPF transmits the subpackets to the gNB, and then the gNB transmits the subpackets to the user equipment. The gNB needs to perform augmentation to identify the indication information in the subpacket to determine a start data packet and an end data packet, so as to identify a series of fragmented subpackets of the advanced interactive data packet. At the same time, the gNB puts different types of subpackets received from different GTP-U tunnels into the same DRB for transmission to the user equipment.

In S1150, the gNB transmits the m-th subpacket to the user equipment.

The gNB judges whether the m-th subpacket is successfully transmitted; if so, S1160 is performed; if not, S1170 is performed. In addition, the gNB may also judge whether the m-th subpacket meets the delay requirement; if so, S1160 is performed; if not, S1170 is performed.

In an embodiment of the application, the gNB may transmit subpackets to the user equipment via a Uu interface. Meanwhile, the success and failure of data transmission may be judged through the protocols of the Uu interface, such as PDCP, RLC, etc.

In S1160, continue to transmit the next subpacket until all the fragmented subpackets are transmitted.

In S1170, the received subpackets are discarded at the gNB side. The remaining subpackets transmitted by the UPF are not transmitted to the user equipment any more. If the m-th subpacket that fails to be transmitted is an I-frame advanced interactive data packet, then fragmented subpackets of an associated P-frame advanced interactive data packet are also discarded.

In S1180, the gNB provides a feedback message (referred to as a first feedback message) to the UPF, and notifies the UPF to stop transmitting the remaining subpackets to the gNB.

If the gNB has completely received all the fragmented subpackets of the advanced interactive data packet, it no longer needs to provide the feedback message to the UPF.

In an embodiment of this application, the data processing methods shown in Figs. 10 and 11 may also be combined, that is, when the user equipment detects a transmission failure of an advanced interactive data packet, a feedback is sent from the application layer to the application server, and after determining that the transmission has failed, the gNB may also provide a feedback message to the UPF so as to notify the UPF to stop transmitting subpackets to the gNB.

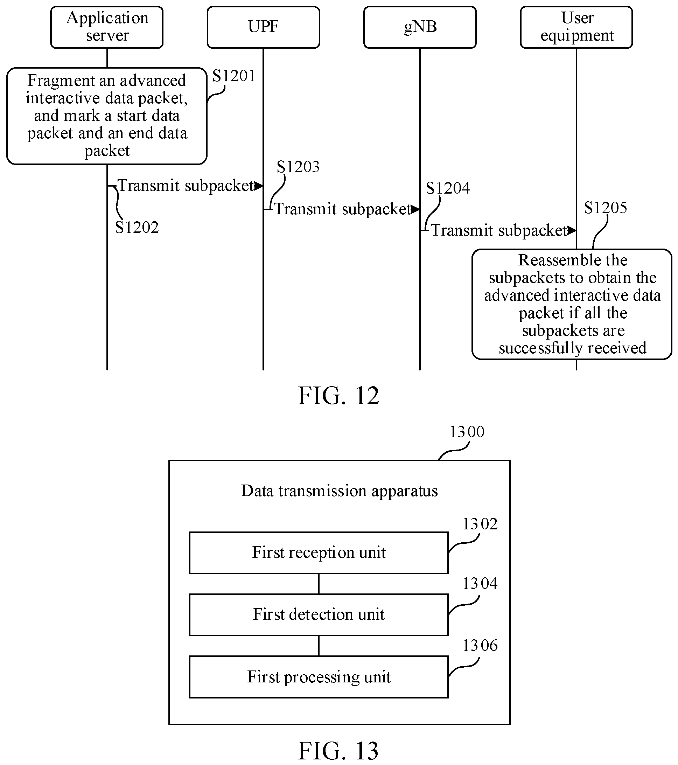

In an embodiment of this application which is not part of this invention, after each node is configured with the transmission parameters of advanced interactive data packets, as shown in FIG. 12, an interaction flow between an application server, an UPF, a gNB and a user equipment is shown, including S1201 to S1205.

In S 1201, the application server fragments an advanced interactive data packet, and marks a start data packet and an end data packet.

In an embodiment of this application, indication information may be added to the start packet and the end packet to indicate which subpacket is the start packet and which subpacket is the end packet. The indication information may be added in a protocol field or payload information of the data packet, such as in a field of the GTP-U tunneling protocol.

In S 1202, the application server transmits a subpacket to the UPF.

In an embodiment of this application, during transmission of the fragmented subpackets by the application server to a UPF, the UPF may identify a start packet and an end packet therein.

In S 1203, the UPF transmits the subpacket to the gNB.

In an embodiment of this application, the UPF may put different types of subpackets into different GTP-U tunnels for transmission to the gNB.

The process of the UPF transmitting the subpacket to the gNB and the process of the application server transmitting the subpacket to the UPF may be performed synchronously. For example, the UPF may transmit a subpacket to the gNB immediately after receiving the subpacket transmitted by the application server (which has not been fully received), so as to reduce the delay of the subpacket to arrive at the user equipment. Of course, the UPF may also transmit the subpackets to the gNB after all the subpackets transmitted by the application server are received. In this way, when there is an error occurring in the receiving process of the UPF, the number of invalid subpackets transmitted to the gNB can be reduced, thereby reducing the consumption of transmission resources.

In an embodiment of this application, in the process of the UPF transmitting a fragmented subpacket of an advanced interactive data packet to the gNB, if it is detected that the transmission of a fragmented subpacket of an advanced interactive data packet of a certain type (referred to as a specified type) has failed or it is detected that the transmission of the subpacket exceeds a delay requirement, the UPF may stop transmitting the remaining subpackets of the advanced interactive data packet of the type to the gNB to reduce the number of invalid subpackets transmitted, thereby reducing the consumption of transmission resources. In this case, the UPF may also delete the received fragmented subpackets of the advanced interactive data packet of the type, and at the same time, the UPF may also notify the application server to stop transmitting the remaining fragmented subpackets of the advanced interactive data packet to the UPF.

In an embodiment of this application, the UPF may also stop transmitting the remaining fragmented subpackets of the advanced interactive data packet of a certain type transmitted by the application server to the gNB when not all the fragmented subpackets of the advanced interactive data packet of the type are received within a preset duration, and the UPF may also delete the received fragmented subpackets of the advanced interactive data packet of the type, and at the same time, the UPF may also notify the application server to stop transmitting the remaining fragmented subpackets of the advanced interactive data packet of the type to the UPF.

In S 1204, the gNB transmits the subpacket to the user equipment.

In an embodiment of this application, the gNB may transmit the fragmented subpackets of different types of advanced interactive data packets to the user equipment by a same DRB.

In an embodiment of this application, the process of the gNB transmitting the subpacket to the user equipment and the process of the UPF transmitting the subpacket to the gNB may be performed synchronously. For example, the gNB may transmit a subpacket to the user equipment immediately after receiving the subpacket transmitted by the UPF (which has not been fully received), so as to reduce the delay of the subpacket to arrive at the user equipment. Of course, the gNB may also transmit the subpackets to the user equipment after all the subpackets transmitted by the UPF are received. In this way, when there is an error occurring in the receiving process of the UPF, the number of invalid subpackets transmitted to the gNB can be reduced, thereby reducing the consumption of transmission resources.

In an embodiment of this application, in the process of the gNB transmitting a fragmented subpacket of an advanced interactive data packet to the user equipment, if it is detected that the transmission of a fragmented subpacket of an advanced interactive data packet of a certain type has failed or it is detected that the transmission of the subpacket exceeds a delay requirement, the gNB may stop transmitting the remaining subpackets of the advanced interactive data packet of the type to the user equipment to reduce the number of invalid subpackets transmitted, thereby reducing the consumption of transmission resources. In this case, the gNB may also delete the received fragmented subpackets of the advanced interactive data packet of the type, and at the same time, the gNB may also notify the UPF to stop transmitting the remaining fragmented subpackets of the advanced interactive data packet of the type to the gNB.

In an embodiment of this application, when not all the fragmented subpackets of an advanced interactive data packet of a certain type transmitted by the UPF are received within a preset duration, the gNB may also stop transmitting the remaining fragmented subpackets of the advanced interactive data packet of the type to the user equipment, and the gNB may also delete the received subpackets of the advanced interactive data packet of the type, and at the same time, the gNB may also notify the UPF to stop transmitting the remaining fragmented subpackets of the advanced interactive data packet of the type to the gNB.

In S1205, if the user equipment successfully receives all the subpackets, the subpackets are reassembled to restore the advanced interactive data packet.

In an embodiment of this application, if the user equipment detects a transmission failure of an advanced interactive data packet of a certain type, a feedback may be provided from the application layer to the application server.

In an embodiment of this application, the transmission failure of an advanced interactive data packet of a certain type may be determined if the user equipment does not completely receive all the subpackets of the advanced interactive data packet of the type within a certain time limit. The information fed back (referred to as transmission failure information) to the application server is used for indicating that the transmission of the advanced interactive data packet of the specified type has failed.

According to the data transmission method of this embodiment of this application, different types of advanced interactive data packets are transmitted in different GTP-U tunnels and correspond to the same DRB, so as to reduce the impact on the protocol side on the premise of supporting the transmission of multiple types of advanced interactive data packets. At the same time, when the transmission of a fragmented subpacket of an advanced interactive data packet has failed or the transmission exceeds a delay requirement, the transmission of the remaining subpackets to a subsequent node may be stopped in time, so that the occupation of bandwidth can be reduced, and thus the occupation of transmission resources by the advanced interactive data packet during transmission can be reduced.

The data transmission apparatus provided in the embodiments of this application may be used to perform the data transmission method according to the embodiments of this application.

FIG. 13 shows a block diagram of a data transmission apparatus that may be arranged inside a next generation nodeB accordance with an embodiment of this application which is not part of this invention.

Referring to FIG. 13, a data transmission apparatus 1300 according to an embodiment of this application includes: a first reception unit 1302, a first detection unit 1304, and a first processing unit 1306.

The first reception unit 1302 is configured to receive access stratum context information transmitted by an AMF, the access stratum context information being used for indicating that different types of advanced interactive data packets are transmitted in different GTP-U tunnels, and are carried by a same DRB;
the first detection unit 1304 is configured to detect, in response to identifying that data packets transmitted by a user-plane functional entity through the GTP-U tunnels are fragmented subpackets of the advanced interactive data packets, a state of transmission of the fragmented subpackets of the advanced interactive data packets based on the access stratum context information during transmission of the fragmented subpackets of the advanced interactive data packets to a user equipment based on the DRB; and
the first processing unit 1306 is configured to stop transmission of remaining fragmented subpackets of an advanced interactive data packet of a specified type to the user equipment upon detection that transmission of a fragmented subpacket of the advanced interactive data packet of the specified type to the user equipment has failed.

In an embodiment of this application, the first processing unit 1306 is further configured to discard received fragmented subpackets of the advanced interactive data packet of the specified type upon detection that transmission of a fragmented subpacket of the advanced interactive data packet of the specified type to the user equipment has failed.

In an embodiment of this application, the first processing unit 1306 is further configured to transmit a first feedback message to the user-plane functional entity upon detection that transmission of the fragmented subpacket of the advanced interactive data packet of the specified type to the user equipment has failed, the first feedback message being used for instructing the user-plane functional entity to stop transmission of remaining fragmented subpackets of the advanced interactive data packet of the specified type.

In an embodiment of this application, the first processing unit 1306 is configured to transmit the first feedback message to the user-plane functional entity in a case that not all fragmented subpackets of the advanced interactive data packet of the specified type are completely received.

In an embodiment of this application, a plurality of subpackets are created by fragmentation of the advanced interactive data packet, including a start data packet and an end data packet; the start data packet includes first indication information indicating that the start data packet is transmitted first in the plurality of subpackets; the end data packet includes second indication information indicating that the end data packet is transmitted last in the plurality of subpackets.

In an embodiment of this application, the first detection unit 1304 is further configured to receive the data packets transmitted by the user-plane functional entity through the GTP-U tunnels; and identify whether each data packet is a fragmented subpacket of an advanced interactive data packet based on indication information in a protocol field of the data packet.

In an embodiment of this application, alternatively, the first detection unit 1304 is further configured to identify whether each data packet is a fragmented subpacket of an advanced interactive data packet based on indication information in payload information of the data packet.

In an embodiment of this application, the first processing unit 1306 is further configured to stop transmission of remaining fragmented subpackets of the advanced interactive data packet of the specified type to the user equipment, and discard received fragmented subpackets of the advanced interactive data packet of the specified type in a case that not all fragmented subpackets of the advanced interactive data packet of the specified type transmitted by the user-plane functional entity are completely received within a preset duration.

In an embodiment of this application, the different types of advanced interactive data packets include: advanced interactive data packets corresponding to key frames and advanced interactive data packets corresponding to non-key frames, and the advanced interactive data packet of the specified type is an advanced interactive data packet corresponding to a key frame; the first processing unit 1306 is further configured to perform at least one of the following operations upon detection that transmission of a fragmented subpacket of the advanced interactive data packet corresponding to the key frame to the user equipment has failed: stop transmission of an advanced interactive data packet corresponding to a non-key frame associated with the key frame to the user equipment, and discard a received advanced interactive data packet corresponding to the non-key frame associated with the key frame.

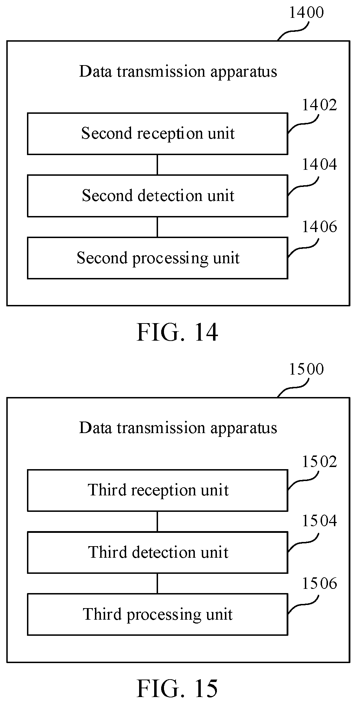

FIG. 14 shows a block diagram of another data transmission apparatus that may be arranged inside a user-plane functional entity according to an embodiment of this application which is not part of this invention.

Referring to FIG. 14, a data transmission apparatus 1400 according to an embodiment of this application includes: a second reception unit 1402, a second detection unit 1404, and a second processing unit 1406.

The second reception unit 1402 is configured to receive protocol data unit (PDU) session management policy information transmitted by a session management function (SMF), the PDU session management policy information being used for indicating that different types of advanced interactive data packets are transmitted in different general packet radio service tunnel protocol user plane (GTP-U) tunnels, and are carried by a same data radio bearer (DRB);
the second detection unit 1404 is configured to transmit received fragmented subpackets of the different types of the advanced interactive data packets to a next generation nodeB in the different GTP-U tunnels based on the PDU session management policy information, and detect a state of transmission of the fragmented subpackets of the advanced interactive data packets;
the second first processing unit 1406 is configured to stop transmission of remaining fragmented subpackets of an advanced interactive data packet of a specified type to the next generation nodeB upon detection that transmission of a fragmented subpacket of the advanced interactive data packet of the specified type to the next generation nodeB has failed.

In an embodiment of this application, the second processing unit 1406 is further configured to discard received fragmented subpackets of the advanced interactive data packet of the specified type upon detection that transmission of the fragmented subpacket of the advanced interactive data packet of the specified type to the next generation nodeB has failed.

In an embodiment of this application, the second processing unit 1406 is further configured to transmit a second feedback message to an application server upon detection that transmission of the fragmented subpacket of the advanced interactive data packet of the specified type to the next generation nodeB has failed, the second feedback message being used for instructing the application server to stop transmission of remaining fragmented subpackets of the advanced interactive data packet of the specified type to the application server.

In an embodiment of this application, the second processing unit 1406 is configured to transmit the second feedback message to the application server in a case that not all fragmented subpackets of the advanced interactive data packet of the specified type are completely received.

In an embodiment of this application, the second processing unit 1406 is further configured to stop transmission of remaining fragmented subpackets of the advanced interactive data packet of the specified type to the next generation nodeB, and discard received fragmented subpackets of the advanced interactive data packet of the specified type in a case that not all fragmented subpackets of the advanced interactive data packet of the specified type are completely received within a preset duration.

In an embodiment of this application, the different types of advanced interactive data packets include: advanced interactive data packets corresponding to key frames and advanced interactive data packets corresponding to non-key frames, and the advanced interactive data packet of the specified type is an advanced interactive data packet corresponding to a key frame;
the second processing unit 1406 is further configured to perform at least one of the following operations upon detection that transmission of a fragmented subpacket of the advanced interactive data packet corresponding to the key frame to the next generation nodeB has failed: stop transmission of an advanced interactive data packet corresponding to a non-key frame associated with the key frame to the next generation nodeB, and discard a received advanced interactive data packet corresponding to the non-key frame associated with the key frame.

FIG. 15 shows a block diagram of yet another data transmission apparatus that may be arranged inside a user equipment according to an embodiment of this application which is not part of this invention.

Referring to FIG. 15, a data transmission apparatus 1500 according to an embodiment of this application includes: a third reception unit 1502, a third detection unit 1504, and a third processing unit 1506.

The third reception unit 1502 is configured to receive user equipment route selection policy (URSP) rules transmitted by an access and mobility management function (AMF), the URSP rules being used for indicating that different types of advanced interactive data packets are transmitted in different general packet radio service tunnel protocol user plane (GTP-U) tunnels, and are carried by a same data radio bearer (DRB);
the third detection unit 1504 is configured to detect, in response to identifying that data packets transmitted by a next generation nodeB based on the DRB are fragmented subpackets of the advanced interactive data packets, a state of reception of all fragmented subpackets of the advanced interactive data packets based on the URSP rules during reception of the fragmented subpackets of the advanced interactive data packets; and
the third processing unit 1506 is configured to transmit a transmission failure message to an application server transmitting an advanced interactive data packet of a specified type upon detection that not all fragmented subpackets of the advanced interactive data packet of the specified type are completely received within a preset duration, the transmission failure message being used for indicating transmission failure of the advanced interactive data packet of the specified type to the application server.

In an embodiment of this application, the third processing unit 1506 is further configured to discard received fragmented subpackets of the advanced interactive data packet of the specified type upon detection that not all fragmented subpackets of the advanced interactive data packet of the specified type are completely received within the preset duration.

In an embodiment of this application, the third processing unit 1506 is further configured to perform integration processing on all fragmented subpackets of the advanced interactive data packet of the specified type to obtain the advanced interactive data packet of the specified type in a case that all the fragmented subpackets of the advanced interactive data packet of the specified type are completely received.

In an embodiment of this application, the different types of advanced interactive data packets include: advanced interactive data packets corresponding to key frames and advanced interactive data packets corresponding to non-key frames, and the advanced interactive data packet of the specified type is an advanced interactive data packet corresponding to a key frame.

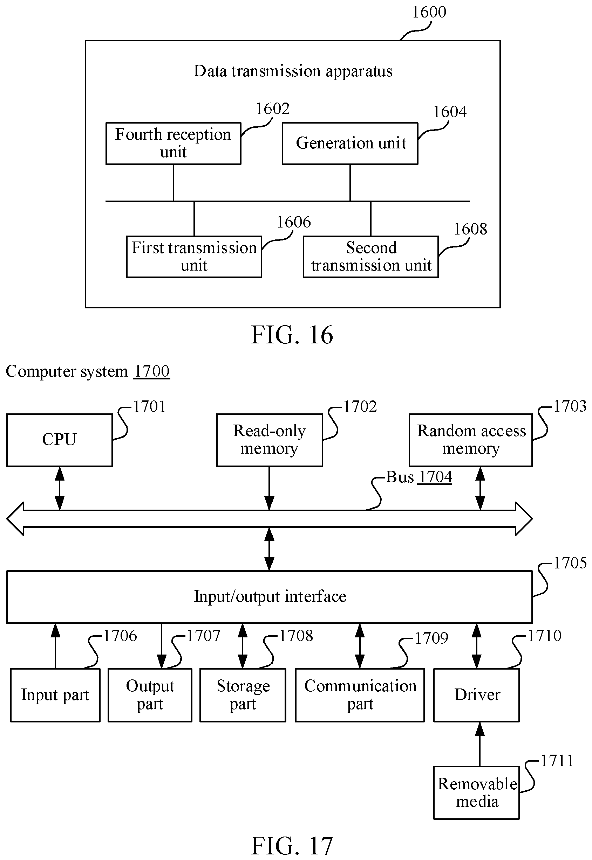

FIG. 16 shows a block diagram of still yet another data transmission apparatus that may be arranged inside a PCF according to an embodiment of this application which is not part of this invention.

Referring to FIG. 16, a data transmission apparatus 1600 according to an embodiment of this application includes: A fourth reception unit 1602, a generation unit 1604, a first transmission unit 1606, and a second transmission unit 1608.

The fourth reception unit 1602 is configured to receive general packet radio service tunnel protocol user plane (GTP-U) tunnel configuration information for advanced interactive data packets which is transmitted by an application function (AF), the GTP-U tunnel configuration information being used for indicating that different types of advanced interactive data packets are transmitted in different GTP-U tunnels, and are carried by a same data radio bearer (DRB);
the generation unit 1604 is configured to generate user equipment route selection policy (URSP) rules and protocol data unit (PDU) session management policy information based on the GTP-U tunnel configuration information, the URSP rules and the PDU session management policy information being used for indicating that the different types of advanced interactive data packets are transmitted in the different GTP-U tunnels, and are carried by the same DRB;
the first transmission unit 1606 is configured to forward the URSP rules to a user equipment by an access and mobility management function (AMF), and configure access stratum context information to a next generation nodeB based on the URSP rules, the access stratum context information being used for indicating that the different types of advanced interactive data packets are transmitted in the different GTP-U tunnels, and are carried by the same DRB; and
the second transmission unit 1608 is configured to configure the PDU session management policy information to a user-plane functional entity by a session management function (SMF).

In an embodiment of this application, the different types of advanced interactive data packets include: advanced interactive data packets corresponding to key frames and advanced interactive data packets corresponding to non-key frames, and the advanced interactive data packet of the specified type is an advanced interactive data packet corresponding to a key frame.

FIG. 17 shows a schematic structural diagram of an electronic device according to this application.

A computer system 1700 of the electronic device shown in FIG. 17 is merely an example, and does not constitute any limitation on functions and use ranges of this application.

As shown in FIG. 17, the computer system 1700 includes a central processing unit (CPU) 1701 (referred to as one or more processors), which may perform various suitable actions and processing based on a program stored in a read-only memory (ROM) 1702 or a program loaded from a storage part 1708 into a random access memory (RAM) 1703, for example, perform the method described in the foregoing embodiments. The RAM 1703 further stores various programs and data required for operating the system. The CPU 1701, the ROM 1702, and the RAM 1703 are connected to each other through a bus 1704. An input/output (I/O) interface 1705 is also connected to the bus 1704.

The following components are connected to the I/O interface 1705: an input part 1706 including a keyboard, a mouse, or the like, an output part 1707 including a cathode ray tube (CRT), a liquid crystal display (LCD), a speaker, or the like, a storage part 1708 including a hard disk, or the like, and a communication part 1709 including a network interface card such as a local area network (LAN) card or a modem. The communication part 1709 performs communication processing by using a network such as the Internet. A drive 1710 is also connected to the I/O interface 1705 as required. A removable medium 1711, such as a magnetic disk, an optical disc, a magneto-optical disk, and a semiconductor memory, is mounted on the driver 1710 as required, so that a computer program read from the removable medium is installed into the storage part 1708 as required.

In an embodiment of this application which is not part of this invention, the data processing method provided by an embodiment of this application may be implemented as a computer software program. For example, an embodiment of this application includes a computer program product, including a computer program stored in a computer-readable storage medium, the computer program including a computer program used for performing the data processing method provided in the embodiments of this application. In this case, by using the communication part 1709, the computer program may be downloaded and installed on a network, and/or installed from the removable medium 1711. When the computer program is executed by the central processing unit (CPU) 1701, the data processing method provided in the embodiments of this application is performed.

The computer-readable storage medium provided in the embodiments of this application may be, for example, but is not limited to, an electric, magnetic, optical, electromagnetic, infrared, or semi-conductive system, apparatus, or component, or any combination thereof. The computer-readable storage medium may include but is not limited to: an electrical connection having one or more wires, a portable computer magnetic disk, a hard disk, a random access memory (RAM), a read-only memory (ROM), an erasable programmable read-only memory (EPROM), a flash memory, an optical fiber, a compact disk read-only memory (CD-ROM), an optical storage device, a magnetic storage device, or any appropriate combination thereof. In the embodiments of this application, the computer-readable storage medium may be any tangible medium including or storing a program, and the program may be used by or used in combination with an instruction execution system, an apparatus, or a device. In the embodiments of this application, the computer-readable storage medium may alternatively be a computer-readable signal medium that includes a data signal in a baseband or propagated as a part of a carrier wave, the data signal carrying a computer-readable computer program. A data signal propagated in such a way may assume a plurality of forms, including, but not limited to, an electromagnetic signal, an optical signal, or any appropriate combination thereof. The computer-readable storage medium may be any computer-readable medium. The computer-readable storage medium may send, propagate or transmit a program that is used by or used in combination with an instruction execution system, apparatus or device. The computer program included in the computer-readable storage medium may be transmitted by using any suitable medium, including but not limited to: a wireless medium, a wired medium, or the like, or any suitable combination thereof.

The flowcharts and block diagrams in the accompanying drawings provided in the embodiments of this application illustrate possible system architectures, functions, and operations that may be implemented by a system, a method, and a computer program product according to the embodiments of this application. Each box in a flowchart or a block diagram may represent a module, a program segment, or a part of code. The module, the program segment, or the part of code includes one or more executable instructions used for implementing designated logic functions. In some implementations used as substitutes, functions annotated in boxes may alternatively occur in a sequence different from that annotated in an accompanying drawing. For example, actually two boxes shown in succession may be performed basically in parallel, and sometimes the two boxes may be performed in a reverse sequence. This is determined by a related function. Each box in a block diagram and/or a flowchart and a combination of boxes in the block diagram and/or the flowchart may be implemented by using a dedicated hardware-based system configured to perform a specified function or operation, or may be implemented by using a combination of dedicated hardware and a computer instruction.

Related units involved in the embodiments of this application may be implemented in a software manner, or may be implemented in a hardware manner, and the unit described can also be set in a processor. Names of these units do not constitute a limitation on the units in a case.

An embodiment of this application which is not part of this invention further provides a computer-readable storage medium. The computer-readable storage medium may be included in the electronic device described in the foregoing embodiments, or may exist alone and is not disposed in the electronic device. The computer-readable medium carries one or more programs, the one or more programs, when executed by the electronic device, causing the electronic device to implement the data transmission method in the embodiments of this application.

Although several modules or units of an electronic device for action execution are mentioned in the descriptions of the embodiments of this application, the division is not mandatory. Actually, according to the implementations of the embodiments of this application, the features and functions of two or more modules or units described in the embodiments of this application may be specified in one module or unit. Conversely, the features and functions of one module or unit described in the embodiments of this application may be further divided into a plurality of modules or units to be embodied.

Through the description of the foregoing embodiments of this application, a person skilled in the art can easily understand that the exemplary implementations described herein may be implemented by software, or may be implemented by combining software with necessary hardware. Therefore, the data processing method according to the embodiments of this application may be implemented in a form of a software product. The software product may be stored in a non-volatile storage medium (which may be a CD-ROM, a USB flash drive, a removable hard disk, or the like) or on the network, including several instructions for instructing a computing device (which may be a personal computer, a server, a touch terminal, a network device, or the like) to perform the data processing method according to the embodiments of this application.

## Claims

1. A data transmission method, performed by a next generation nodeB, **characterized by** comprising:
receiving (S310) access stratum context information transmitted by an access and mobility management function, AMF, the access stratum context information indicating that different types of advanced interactive data packets are transmitted in different general packet radio service tunnel protocol user plane, GTP-U, tunnels, and are carried by a same data radio bearer, DRB, wherein the advanced interactive data packets are generated by application layer of an advanced interactive service, wherein an advanced interactive data packet generated by the application layer is fragmented into a large number of subpackets and transmitted with a very low delay;
in response to identifying that data packets transmitted by a user-plane functional entity through the GTP-U tunnels are fragmented subpackets of the advanced interactive data packets, detecting (S320) a state of transmission of the fragmented subpackets of the advanced interactive data packets based on the access stratum context information during transmission of the fragmented subpackets of the advanced interactive data packets to a user equipment based on the DRB; and
in response to detecting that transmission of a fragmented subpacket of an advanced interactive data packet of a specified type to the user equipment has failed, stopping (S330) transmission of remaining fragmented subpackets of the advanced interactive data packet of the specified type to the user equipment.

2. The data transmission method according to claim 1, further comprising:
in response to detecting that transmission of the fragmented subpacket of the advanced interactive data packet of the specified type to the user equipment has failed, discarding received fragmented subpackets of the advanced interactive data packet of the specified type.

3. The data transmission method according to claim 1, further comprising:
in response to detecting that transmission of the fragmented subpacket of the advanced interactive data packet of the specified type to the user equipment has failed, transmitting a first feedback message to the user-plane functional entity, the first feedback message instructing the user-plane functional entity to stop the transmission of remaining fragmented subpackets of the advanced interactive data packet of the specified type.

4. The data transmission method according to claim 3, wherein transmitting the first feedback message to the user-plane functional entity comprises:
transmitting the first feedback message to the user-plane functional entity in response to determining that not all fragmented subpackets of the advanced interactive data packet of the specified type are completely received.

5. The data transmission method according to claim 1, wherein
a plurality of subpackets are created by fragmentation of each advanced interactive data packet, comprising a start data packet and an end data packet;
the start data packet comprises first indication information indicating that the start data packet is transmitted first in the plurality of subpackets; and
the end data packet comprises second indication information indicating that the end data packet is transmitted last in the plurality of subpackets.

6. The data transmission method according to claim 1, further comprising:
receiving the data packets transmitted by the user-plane functional entity through the GTP-U tunnels; and for each data packet,
identifying whether the data packet is a fragmented subpacket of an advanced interactive data packet based on indication information in a protocol field of the data packet; or
identifying whether the data packet is a fragmented subpacket of an advanced interactive data packet based on indication information in payload information of the data packet.

7. The data transmission method according to claim 1, further comprising:
in response to determining that not all fragmented subpackets of the advanced interactive data packet of the specified type transmitted by the user-plane functional entity are completely received within a preset duration, stopping the transmission of remaining fragmented subpackets of the advanced interactive data packet of the specified type to the user equipment, and discarding received fragmented subpackets of the advanced interactive data packet of the specified type.

8. The data transmission method according to any of claims 1 to 7, wherein the different types of advanced interactive data packets comprise: advanced interactive data packets corresponding to key frames and advanced interactive data packets corresponding to non-key frames, and the advanced interactive data packet of the specified type is an advanced interactive data packet corresponding to a key frame; and
wherein the data transmission method further comprises:
in response to detecting that transmission of a fragmented subpacket of the advanced interactive data packet corresponding to the key frame to the user equipment has failed, performing at least one of:
stopping transmission of an advanced interactive data packet corresponding to a non-key frame associated with the key frame to the user equipment, and
discarding a received advanced interactive data packet corresponding to the non-key frame associated with the key frame.

9. A data transmission method, performed by a user plane function, UPF, **characterized by** comprising:
receiving (S510) protocol data unit, PDU, session management policy information transmitted by a session management function, SMF, the PDU session management policy information indicating that different types of advanced interactive data packets are transmitted in different general packet radio service tunnel protocol user plane, GTP-U, tunnels, and are carried by a same data radio bearer, DRB, wherein the advanced interactive data packets are generated by application layer of an advanced interactive service, are fragmented into a large number of subpackets and are transmitted with a very low delay;
transmitting (S520) received fragmented subpackets of the different types of advanced interactive data packets to a next generation nodeB in the different GTP-U tunnels based on the PDU session management policy information, and detecting a state of transmission of the fragmented subpackets of the advanced interactive data packets; and
in response to detecting that transmission of a fragmented subpacket of an advanced interactive data packet of a specified type to the next generation nodeB has failed, stopping (S530) transmission of remaining fragmented subpackets of the advanced interactive data packet of the specified type to the next generation nodeB.

10. The data transmission method according to claim 9, further comprising:
in response to detecting that transmission of the fragmented subpacket of the advanced interactive data packet of the specified type to the next generation nodeB has failed, discarding received fragmented subpackets of the advanced interactive data packet of the specified type.

11. The data transmission method according to claim 9, further comprising:
in response to detecting that transmission of the fragmented subpacket of the advanced interactive data packet of the specified type to the next generation nodeB has failed, transmitting a second feedback message to an application server, the second feedback message instructing the application server to stop the transmission of remaining fragmented subpackets of the advanced interactive data packet of the specified type.

12. The data transmission method according to claim 11, wherein transmitting the second feedback message to the application server, comprises:
transmitting the second feedback message to the application server in response to determining that not all fragmented subpackets of the advanced interactive data packet of the specified type are completely received.

13. The data transmission method according to claim 9, further comprising:
in response to determining that not all fragmented subpackets of the advanced interactive data packet of the specified type are completely received within a preset duration, stopping the transmission of remaining fragmented subpackets of the advanced interactive data packet of the specified type to the next generation nodeB, and discarding received fragmented subpackets of the advanced interactive data packet of the specified type.

14. The data transmission method according to any of claims 9 to 13, wherein the different types of advanced interactive data packets comprise: advanced interactive data packets corresponding to key frames and advanced interactive data packets corresponding to non-key frames, and the advanced interactive data packet of the specified type is an advanced interactive data packet corresponding to a key frame; and
wherein the data transmission method further comprises:
in response to detecting that transmission of a fragmented subpacket of the advanced interactive data packet corresponding to the key frame to the next generation nodeB has failed, performing at least one of:
stopping transmission of an advanced interactive data packet corresponding to a non-key frame associated with the key frame to the next generation nodeB, and
discarding a received advanced interactive data packet corresponding to the non-key frame associated with the key frame.

15. An electronic device, **characterized by** comprising:
one or more processors; and
a storage apparatus, configured to store one or more computer programs, the one or more computer programs, when executed by the one or more processors, implementing the data transmission method according to any one of claims 1 to 8; or the data transmission method according to any one of claims 9 to 14.

## Patentansprüche

1. Datenübertragungsverfahren, das von einem nodeB einer nächsten Generation durchgeführt wird, **dadurch gekennzeichnet, dass** es Folgendes umfasst:
Empfangen (S310) von Zugangsschichtkontextinformationen, die von einer Zugangs- und Mobilitätsverwaltungsfunktion, AMF, übertragen werden, wobei die Zugangsschichtkontextinformationen anzeigen, dass verschiedene Arten von erweiterten interaktiven Datenpaketen in verschiedenen allgemeinen Paketfunkdiensttunnelprotokoll-Benutzerebenen(GTP-U)-Tunneln übertragen und von einem selben Datenfunkträger, DRB, transportiert werden, wobei die erweiterten interaktiven Datenpakete durch eine Anwendungsschicht eines erweiterten interaktiven Dienstes erzeugt werden, wobei ein erweitertes interaktives Datenpaket, das von der Anwendungsschicht erzeugt wird, in eine große Anzahl von Unterpaketen fragmentiert und mit einer sehr geringen Verzögerung übertragen wird;
in Reaktion auf das Identifizieren, dass Datenpakete, die von einer funktionalen Benutzerebenenentität über die GTP-U-Tunnel übertragen werden, fragmentierte Unterpakete der erweiterten interaktiven Datenpakete sind, Detektieren (S320) eines Übertragungszustands der fragmentierten Unterpakete der erweiterten interaktiven Datenpakete auf Basis der Zugangsschichtkontextinformationen während der Übertragung der fragmentierten Unterpakete der erweiterten interaktiven Datenpakete auf dem DRB zu einer Teilnehmereinrichtung; und
in Reaktion auf das Detektieren, dass eine Übertragung von fragmentierten Unterpaketen eines erweiterten interaktiven Datenpakets einer spezifizierten Art zur Teilnehmereinrichtung fehlgeschlagen ist, Beenden (S330) der Übertragung von verbleibenden fragmentierten Unterpaketen des erweiterten interaktiven Datenpakets der spezifizierten Art zur Teilnehmereinrichtung.

2. Datenübertragungsverfahren nach Anspruch 1, das ferner Folgendes umfasst:
in Reaktion auf das Detektieren, dass eine Übertragung der fragmentierten Unterpakete des erweiterten interaktiven Datenpakets der spezifizierten Art zur Teilnehmereinrichtung fehlgeschlagen ist, Verwerfen der empfangenen fragmentierten Unterpakete des erweiterten interaktiven Datenpakets der spezifizierten Art.

3. Datenübertragungsverfahren nach Anspruch 1, das ferner Folgendes umfasst:
in Reaktion auf das Detektieren, dass eine Übertragung der fragmentierten Unterpakete des erweiterten interaktiven Datenpakets der spezifizierten Art zur Teilnehmereinrichtung fehlgeschlagen ist, Übertragen einer ersten Feedbacknachricht zur funktionalen Benutzerebenenentität, wobei die erste Feedbacknachricht die funktionale Benutzerebenenentität anweist, die Übertragung von verbleibenden fragmentierten Unterpaketen des erweiterten interaktiven Datenpakets der spezifizierten Art zu beenden.

4. Datenübertragungsverfahren nach Anspruch 3, wobei das Übertragen der ersten Feedbacknachricht zur funktionalen Benutzerebenenentität Folgendes umfasst:
Übertragen der ersten Feedbacknachricht zur funktionalen Benutzerebenenentität in Reaktion auf das Bestimmen, dass nicht alle fragmentierten Unterpakete des erweiterten interaktiven Datenpakets der spezifizierten Art vollständig empfangen wurden.

5. Datenübertragungsverfahren nach Anspruch 1, wobei
eine Vielzahl von Unterpaketen durch Fragmentierung von jedem erweiterten interaktiven Datenpaket erstellt werden, die ein Startdatenpaket und ein Enddatenpaket umfassen;
das Startdatenpaket erste Anzeigeinformationen umfasst, die anzeigen, dass das Startdatenpaket als erstes der Vielzahl von Unterpaketen übertragen wird; und
das Enddatenpaket zweite Anzeigeinformationen umfasst, die anzeigen, dass das Enddatenpaket als letztes der Vielzahl von Unterpaketen übertragen wird.

6. Datenübertragungsverfahren nach Anspruch 1, das ferner Folgendes umfasst:
Empfangen der Datenpakete, die von der funktionalen Benutzerebenenentität über die GTP-U-Tunnel übertragen werden; und für jedes Datenpaket,
Identifizieren auf Basis von Anzeigeinformationen in einem Protokollfeld des Datenpakets, ob das Datenpaket ein fragmentiertes Unterpaket eines erweiterten interaktiven Datenpakets ist; oder
Identifizieren auf Basis von Anzeigeinformationen in Nutzdateninformationen des Datenpakets, ob das Datenpaket ein fragmentiertes Unterpaket eines erweiterten interaktiven Datenpakets ist.

7. Datenübertragungsverfahren nach Anspruch 1, das ferner Folgendes umfasst:
in Reaktion auf das Bestimmen, dass nicht alle fragmentierten Unterpakete des erweiterten interaktiven Datenpakets der spezifizierten Art, die von der funktionalen Benutzerebenenentität übertragen werden, innerhalb einer voreingestellten Dauer vollständig empfangen wurden, Beenden der Übertragung von verbleibenden fragmentierten Unterpaketen des erweiterten interaktiven Datenpakets der spezifizierten Art zur Teilnehmereinrichtung und Verwerfen der empfangenen fragmentierten Unterpakete des erweiterten interaktiven Datenpakets der spezifizierten Art.

8. Datenübertragungsverfahren nach einem der Ansprüche 1 bis 7, wobei die verschiedenen Arten von erweiterten interaktiven Datenpaketen Folgendes umfassen: erweiterte interaktive Datenpakete, die Schlüsselframes entsprechen, und erweiterte interaktive Datenpakete, die Nicht-Schlüsselframes entsprechen, und das erweiterte interaktive Datenpaket der spezifizierten Art ein erweitertes interaktives Datenpaket ist, das einem Schlüsselframe entspricht; und
wobei das Datenübertragungsverfahren ferner Folgendes umfasst:
in Reaktion auf das Detektieren, dass eine Übertragung eines fragmentierten Unterpakets des erweiterten interaktiven Datenpakets, das dem Schlüsselframe entspricht, zur Teilnehmereinrichtung fehlgeschlagen ist, Durchführen von mindestens einem von Folgendem:
Beenden einer Übertragung eines erweiterten interaktiven Datenpakets, das einem Nicht-Schlüsselframe entspricht, der mit dem Schlüsselframe der Teilnehmereinrichtung verknüpft ist, und
Verwerfen eines empfangenen erweiterten interaktiven Datenpakets, das dem Nicht-Schlüsselframe entspricht, der mit dem Schlüsselframe verknüpft ist.

9. Datenübertragungsverfahren, das von einer Benutzerebenenfunktion, UPF, durchgeführt wird, **dadurch gekennzeichnet, dass** es Folgendes umfasst:
Empfangen (S510) von Protokolldateneinheits(PDU)-Sitzungsverwaltungsrichtlinieninformationen, die von einer Sitzungsverwaltungsfunktion, SMF, übertragen werden, wobei die PDU-Sitzungsverwaltungsrichtlinieninformationen anzeigen, dass verschiedene Arten von erweiterten interaktiven Datenpaketen in verschiedenen allgemeinen Paketfunkdiensttunnelprotokoll-Benutzerebenen(GTP-U)-Tunneln übertragen und von einem selben Datenfunkträger, DRB, transportiert werden, wobei die erweiterten interaktiven Datenpakete von einer Anwendungsschicht eines erweiterten interaktiven Dienstes erzeugt, in eine große Anzahl von Unterpaketen fragmentiert und mit einer sehr geringen Verzögerung übertragen werden;
Übertragen (S520) von empfangenen fragmentierten Unterpaketen der verschiedenen Arten von erweiterten interaktiven Datenpaketen zu einem nodeB einer nächsten Generation in den verschiedenen GTP-U-Tunneln auf Basis der PDU-Sitzungsverwaltungsrichtlinieninformationen und Detektieren eines Übertragungszustands der fragmentierten Unterpakete der erweiterten interaktiven Datenpakete; und
in Reaktion auf das Detektieren, dass eine Übertragung von fragmentierten Unterpaketen eines erweiterten interaktiven Datenpakets einer spezifizierten Art zum nodeB der nächsten Generation fehlgeschlagen ist, Beenden (S530) der Übertragung von verbleibenden fragmentierten Unterpaketen des erweiterten interaktiven Datenpakets der spezifizierten Art zum nodeB der nächsten Generation.

10. Datenübertragungsverfahren nach Anspruch 9, das ferner Folgendes umfasst:
in Reaktion auf das Detektieren, dass eine Übertragung der fragmentierten Unterpakete des erweiterten interaktiven Datenpakets der spezifizierten Art zum nodeB der nächsten Generation fehlgeschlagen ist, Verwerfen der empfangenen fragmentierten Unterpakete des erweiterten interaktiven Datenpakets der spezifizierten Art.

11. Datenübertragungsverfahren nach Anspruch 9, das ferner Folgendes umfasst:
in Reaktion auf das Detektieren, dass eine Übertragung der fragmentierten Unterpakete des erweiterten interaktiven Datenpakets der spezifizierten Art zum nodeB der nächsten Generation fehlgeschlagen ist, Übertragen einer zweiten Feedbacknachricht zu einem Anwendungsserver, wobei die zweite Feedbacknachricht den Anwendungsserver anweist, die Übertragung von verbleibenden fragmentierten Unterpaketen des erweiterten interaktiven Datenpakets der spezifizierten Art zu beenden.

12. Datenübertragungsverfahren nach Anspruch 11, wobei das Übertragen der zweiten Feedbacknachricht zum Anwendungsserver Folgendes umfasst:
Übertragen der zweiten Feedbacknachricht zum Anwendungsserver in Reaktion auf das Bestimmen, dass nicht alle fragmentierten Unterpakete des erweiterten interaktiven Datenpakets der spezifizierten Art vollständig empfangen wurden.

13. Datenübertragungsverfahren nach Anspruch 9, das ferner Folgendes umfasst:
in Reaktion auf das Bestimmen, dass nicht alle fragmentierten Unterpakete des erweiterten interaktiven Datenpakets der spezifizierten Art innerhalb einer voreingestellten Dauer vollständig empfangen wurden, Beenden der Übertragung von verbleibenden fragmentierten Unterpaketen des erweiterten interaktiven Datenpakets der spezifizierten Art zum nodeB der nächsten Generation und Verwerfen der empfangenen fragmentierten Unterpakete des erweiterten interaktiven Datenpakets der spezifizierten Art.

14. Datenübertragungsverfahren nach einem der Ansprüche 9 bis 13, wobei die verschiedenen Arten von erweiterten interaktiven Datenpaketen Folgendes umfassen: Erweiterte interaktive Datenpakete, die Schlüsselframes entsprechen, und erweiterte interaktive Datenpakete, die Nicht-Schlüsselframes entsprechen, und das erweiterte interaktive Datenpaket der spezifizierten Art ein erweitertes interaktives Datenpaket ist, dass einem Schlüsselframe entspricht; und
wobei das Datenübertragungsverfahren ferner Folgendes umfasst:
in Reaktion auf das Detektieren, dass eine Übertragung eines fragmentierten Unterpakets des erweiterten interaktiven Datenpakets, das dem Schlüsselframe entspricht, zum nodeB der nächsten Generation fehlgeschlagen ist, Durchführen von mindestens einem von Folgendem:
Beenden einer Übertragung eines erweiterten interaktiven Datenpakets, das einem Nicht-Schlüsselframe entspricht, der mit dem Schlüsselframe des nodeB der nächsten Generation verknüpft ist, und
Verwerfen eines empfangenen erweiterten interaktiven Datenpakets, das dem Nicht-Schlüsselframe entspricht, der mit dem Schlüsselframe verknüpft ist.

15. Elektronische Vorrichtung, **dadurch gekennzeichnet, dass** sie Folgendes umfasst:
einen oder mehrere Prozessoren; und
eine Speichereinrichtung, die dazu ausgelegt ist, ein oder mehrere Computerprogramme zu speichern, wobei das eine oder die mehreren Computerprogramme, wenn sie von einem oder mehreren Prozessoren ausgeführt werden, das Datenübertragungsverfahren nach einem der Ansprüche 1 bis 8; oder das Datenübertragungsverfahren nach einem der Ansprüche 9 bis 14 implementieren.

## Revendications

1. Procédé de transmission de données réalisé par un nœud B de prochaine génération, **caractérisé en ce qu'**il comprend les étapes suivantes :
recevoir (S310) des informations de contexte de strate d'accès transmises par une fonction de gestion d'accès et de mobilité, AMF, les informations de contexte de strate d'accès indiquant que différents types de paquets de données interactifs avancés sont transmis dans différents tunnels de plan d'utilisateur-protocole de tunnellisation de service général de radiocommunication par paquets, GTP-U, et sont transportés par un même support radio de données, DRB, dans lequel les paquets de données interactifs avancés sont générés par une couche d'application d'un service interactif avancé, dans lequel un paquet de données interactif avancé généré par la couche d'application est fragmenté en un grand nombre de sous-paquets et transmis avec un très faible retard ;
en réponse à l'identification que des paquets de données transmis par une entité fonctionnelle de plan utilisateur via les tunnels GTP-U sont des sous-paquets fragmentés des paquets de données interactifs avancés, détecter (S320) un état de transmission des sous-paquets fragmentés des paquets de données interactifs avancés sur la base des informations de contexte de strate d'accès pendant la transmission des sous-paquets fragmentés des paquets de données interactifs avancés à un équipement utilisateur sur la base du DRB ; et
en réponse à la détection qu'une transmission d'un sous-paquet fragmenté d'un paquet de données interactif avancé d'un type spécifié à l'équipement utilisateur a échoué, arrêter (S330) la transmission des sous-paquets fragmentés restants du paquet de données interactif avancé du type spécifié à l'équipement utilisateur.

2. Procédé de transmission de données selon la revendication 1, comprenant en outre l'étape suivante :
en réponse à la détection qu'une transmission du sous-paquet fragmenté du paquet de données interactif avancé du type spécifié à l'équipement utilisateur a échoué, rejeter les sous-paquets fragmentés reçus du paquet de données interactif avancé du type spécifié.

3. Procédé de transmission de données selon la revendication 1, comprenant en outre l'étape suivante :
en réponse à la détection qu'une transmission du sous-paquet fragmenté du paquet de données interactif avancé du type spécifié à l'équipement utilisateur a échoué, transmettre un premier message de rétroaction à l'entité fonctionnelle de plan utilisateur, le premier message de rétroaction ordonnant à l'entité fonctionnelle de plan utilisateur d'arrêter la transmission des sous-paquets fragmentés restants du paquet de données interactif avancé du type spécifié.

4. Procédé de transmission de données selon la revendication 3, dans lequel la transmission du premier message de rétroaction à l'entité fonctionnelle de plan utilisateur comprend ce qui suit :
transmettre le premier message de rétroaction à l'entité fonctionnelle de plan utilisateur en réponse à la détermination que tous les sous-paquets fragmentés du paquet de données interactif avancé du type spécifié ne sont pas complètement reçus.

5. Procédé de transmission de données selon la revendication 1, dans lequel
une pluralité de sous-paquets est créée par fragmentation de chaque paquet de données interactif avancé comprenant un paquet de données de début et un paquet de données de fin ;
le paquet de données de début comprend des premières informations d'indication indiquant que le paquet de données de début est transmis en premier dans la pluralité de sous-paquets ; et
le paquet de données de fin comprend des deuxièmes informations d'indication indiquant que le paquet de données de fin est transmis en dernier dans la pluralité de sous-paquets.

6. Procédé de transmission de données selon la revendication 1, comprenant en outre les étapes suivantes :
recevoir les paquets de données transmis par l'entité fonctionnelle de plan utilisateur via les tunnels GTP-U ; et pour chaque paquet de données,
effectuer une identification pour savoir si le paquet de données est un sous-paquet fragmenté d'un paquet de données interactif avancé sur la base d'informations d'indication dans un champ de protocole du paquet de données ; ou
effectuer une identification pour savoir si le paquet de données est un sous-paquet fragmenté d'un paquet de données interactif avancé sur la base d'informations d'indication dans des informations de charge utile du paquet de données.

7. Procédé de transmission de données selon la revendication 1, comprenant en outre l'étape suivante :
en réponse à la détermination que tous les sous-paquets fragmentés du paquet de données interactif avancé du type spécifié transmis par l'entité fonctionnelle de plan utilisateur ne sont pas complètement reçus dans une durée prédéfinie, arrêter la transmission des sous-paquets fragmentés restants du paquet de données interactif avancé du type spécifié à l'équipement utilisateur, et rejeter les sous-paquets fragmentés reçus du paquet de données interactif avancé du type spécifié.

8. Procédé de transmission de données selon l'une des revendications 1 à 7, dans lequel les différents types de paquets de données interactifs avancés comprennent :
des paquets de données interactifs avancés correspondant à des trames clés et des paquets de données interactifs avancés correspondant à des trames non clés, et le paquet de données interactif avancé du type spécifié est un paquet de données interactif avancé correspondant à une trame clé ; et
dans lequel le procédé de transmission de données comprend en outre l'étape suivante :
en réponse à la détection qu'une transmission d'un sous-paquet fragmenté du paquet de données interactif avancé correspondant à la trame clé à l'équipement utilisateur a échoué, réaliser au moins l'une des opérations suivantes :
arrêter la transmission d'un paquet de données interactif avancé correspondant à une trame non clé associée à la trame clé à l'équipement utilisateur, et
rejeter un paquet de données interactif avancé reçu correspondant à la trame non clé associée à la trame clé.

9. Procédé de transmission de données réalisé par une fonction de plan utilisateur, UPF, **caractérisé en ce qu'**il comprend les étapes suivantes :
recevoir (S510) des informations de politique de gestion de session d'unité de données de protocole, PDU, transmises par une fonction de gestion de session, SMF, les informations de politique de gestion de session PDU indiquant que différents types de paquets de données interactifs avancés sont transmis dans différents tunnels de plan d'utilisateur-protocole de tunnellisation de service général de radiocommunication par paquets, GTP-U, et sont transportés par un même support radio de données, DRB, dans lequel les paquets de données interactifs avancés sont générés par une couche d'application d'un service interactif avancé, fragmentés en un grand nombre de sous-paquets et transmis avec un très faible retard ;
transmettre (S520) des sous-paquets fragmentés reçus des différents types de paquets de données interactifs avancés à un nœud B de prochaine génération dans les différents tunnels GTP-U sur la base des informations de politique de gestion de session PDU, et détecter un état de transmission des sous-paquets fragmentés des paquets de données interactifs avancés ; et
en réponse à la détection qu'une transmission d'un sous-paquet fragmenté d'un paquet de données interactif avancé d'un type spécifié au nœud B de prochaine génération a échoué, arrêter (S530) la transmission des sous-paquets fragmentés restants du paquet de données interactif avancé du type spécifié au nœud B de prochaine génération.

10. Procédé de transmission de données selon la revendication 9, comprenant en outre l'étape suivante :
en réponse à la détection qu'une transmission du sous-paquet fragmenté du paquet de données interactif avancé du type spécifié au nœud B de prochaine génération a échoué, rejeter les sous-paquets fragmentés reçus du paquet de données interactif avancé du type spécifié.

11. Procédé de transmission de données selon la revendication 9, comprenant en outre l'étape suivante :
en réponse à la détection qu'une transmission du sous-paquet fragmenté du paquet de données interactif avancé du type spécifié au nœud B de prochaine génération a échoué, transmettre un deuxième message de rétroaction à un serveur d'application, le deuxième message de rétroaction ordonnant au serveur d'application d'arrêter la transmission des sous-paquets fragmentés restants du paquet de données interactif avancé du type spécifié.

12. Procédé de transmission de données selon la revendication 11, dans lequel la transmission du deuxième message de rétroaction au serveur d'application, comprend ce qui suit :
transmettre le deuxième message de rétroaction au serveur d'application en réponse à la détermination que tous les sous-paquets fragmentés du paquet de données interactif avancé du type spécifié ne sont pas complètement reçus.

13. Procédé de transmission de données selon la revendication 9, comprenant en outre l'étape suivante :
en réponse à la détermination que tous les sous-paquets fragmentés du paquet de données interactif avancé du type spécifié ne sont pas complètement reçus dans une durée prédéfinie, arrêter la transmission des sous-paquets fragmentés restants du paquet de données interactif avancé du type spécifié au nœud B de prochaine génération, et rejeter les sous-paquets fragmentés reçus du paquet de données interactif avancé du type spécifié.

14. Procédé de transmission de données selon l'une des revendications 9 à 13, dans lequel les différents types de paquets de données interactifs avancés comprennent :
des paquets de données interactifs avancés correspondant à des trames clés et des paquets de données interactifs avancés correspondant à des trames non clés, et le paquet de données interactif avancé du type spécifié est un paquet de données interactif avancé correspondant à une trame clé ; et
dans lequel le procédé de transmission de données comprend en outre l'étape suivante :
en réponse à la détection qu'une transmission d'un sous-paquet fragmenté du paquet de données interactif avancé correspondant à la trame clé au nœud B de prochaine génération a échoué, réaliser au moins l'une des opérations suivantes :
arrêter la transmission d'un paquet de données interactif avancé correspondant à une trame non clé associée à la trame clé au nœud B de prochaine génération, et
rejeter un paquet de données interactif avancé reçu correspondant à la trame non clé associée à la trame clé.

15. Dispositif électronique, **caractérisé en ce qu'**il comprend :
un ou plusieurs processeurs ; et
un appareil de stockage configuré pour stocker un ou plusieurs programmes informatiques, les un ou plusieurs programmes informatiques, lorsqu'ils sont exécutés par les un ou plusieurs processeurs, mettant en œuvre le procédé de transmission de données selon l'une des revendications 1 à 8 ; ou le procédé de transmission de données selon l'une des revendications 9 à 14.
